# EUROPEAN PATENT APPLICATION

(11) **EP 4 686 107 A2**
(43) Date of publication of application: **28.01.2026**
(21) Application number: 24792897.1
(22) Date of filing: 03.04.2024
(51) Int. Cl.: H04B 1/44, H04B 17/10, H04B 17/20, H04B 17/318, H04B 17/309, H04W 84/06, H04B 17/12, H04B 17/21, H04W 4/12

(54) **METHOD FOR CONTROLLING ANTENNA CONFIGURATION IN ELECTRONIC DEVICE COMPRISING PLURALITY OF ANTENNAS, AND ELECTRONIC DEVICE SUPPORTING SAME**

(30) Priority: 21.04.2023 KR 20230052511; 30.10.2023 KR 20230146969
(71) Applicant: Samsung Electronics Co., Ltd, Suwon-si, Gyeonggi-do 16677 (KR)
(72) Inventor: JEON, Minhwan, Suwon-si Gyeonggi-do 16677 (KR); KIM, Seunghwan, Suwon-si Gyeonggi-do 16677 (KR); KIM, Youngsik, Suwon-si Gyeonggi-do 16677 (KR); GHIM, Jaegon, Suwon-si Gyeonggi-do 16677 (KR); KIM, Cheonshik, Suwon-si Gyeonggi-do 16677 (KR); SEO, Hyunmin, Suwon-si Gyeonggi-do 16677 (KR); LEE, Dongsub, Suwon-si Gyeonggi-do 16677 (KR); CHO, Youngsang, Suwon-si Gyeonggi-do 16677 (KR); CHAE, Dongwon, Suwon-si Gyeonggi-do 16677 (KR)
(74) Representative: Gulde & Partner
(86) International application number: PCT/KR2024/004301
(87) International publication number: WO 2024/219711

(57) **Abstract**

According to one embodiment, an electronic device comprises: a plurality of antennas configured to transmit and/or receive an RF signal related to non-terrestrial network communication; a memory for storing instructions and a plurality of tune codes; and at least one processor operatively connected to the plurality of antennas and the memory, wherein the instructions, when executed by the at least one processor, may cause the electronic device to: configure an operation mode of at least one antenna among the plurality of antennas to be a reception mode, on the basis of a first tune code among the plurality of tune codes; receive, in the reception mode, via the plurality of antennas, an RF signal related to the non-terrestrial network communication; confirm a first parameter related to the received RF signal; confirm whether the value of the first parameter exceeds a first value; and change the operation mode of the at least one antenna to a transmission mode on the basis of a second tune code different from the first tune code among the plurality of tune codes, on the basis of confirming that the value of the first parameter exceeds the first value.

## Description

### [Technical Field]

The disclosure relates to a method for controlling a configuration of an antenna in an electronic device and an electronic device supporting the same.

### [Background Art]

Electronic devices supporting non-terrestrial network communication (e.g., satellite communication) are being actively introduced. As an example, an electronic device may communicate with a satellite of a satellite communication company by using the frequency and communication scheme of the company. As an example, an electronic device may communicate with a satellite using a long-term evolution (LTE) standard cellular frequency based on the LTE standard (or 5G standard). As an example, an electronic device may communicate with a satellite based on the 5G non-terrestrial networks (NTN) standard.

For example, when an electronic device communicates with a non-terrestrial network based on the LTE standard, some of the frequencies defined in the LTE standard may be allocated for non-terrestrial communication. An electronic device may perform satellite communication using a protocol stack used in terrestrial communication and may require no further protocol stack for non-terrestrial communication.

To transmit a signal from an electronic device to a communication network (e.g., a base station), data generated from a processor or a communication processor in the electronic device may be signal-processed through a radio frequency integrated circuit (RFIC) and radio frequency front-end (RFFE) circuit and then transmitted to the outside of the electronic device through at least one antenna. The electronic device may include at least one antenna to transmit signals of various frequency bands. A plurality of antennas for antenna diversity may be included in the electronic device.

### [Detailed Description of the Invention]

### [Technical Solution]

According to an embodiment, an electronic device may include a plurality of antennas configured to transmit and/or receive an RF signal associated with non-terrestrial network communication, memory storing instructions and a plurality of tune codes, and at least one processor operatively coupled to the plurality of antennas and the memory. The instructions may, when executed by the at least one processor, cause the electronic device to set an operation mode of at least one antenna among the plurality of antennas to a reception mode based on a first tune code among the plurality of tune codes. The instructions may, when executed by the at least one processor, cause the electronic device to receive, through the plurality of antennas, an RF signal associated with the non-terrestrial network communication in the reception mode. The instructions may, when executed by the at least one processor, cause the electronic device to identify a first parameter associated with the received RF signal. The instructions may, when executed by the at least one processor, cause the electronic device to identify whether a value of the first parameter exceeds a first value. The instructions may, when executed by the at least one processor, cause the electronic device to change, based on identifying that the value of the first parameter exceeds the first value, an operation mode of the at least one antenna to a transmission mode based on a second tune code different from the first tune code among the plurality of tune codes.

According to an embodiment, a method of operating an electronic device may include setting an operation mode of at least one antenna among a plurality of antennas of the electronic device to a reception mode based on a first tune code among a plurality of tune codes stored in memory of the electronic device. The method may include receiving, through the plurality of antennas, an RF signal associated with non-terrestrial network communication in the reception mode. The method may include identifying a first parameter associated with the received RF signal. The method may include identifying whether a value of the first parameter exceeds a first value. The method may include changing, based on identifying that the value of the first parameter exceeds the first value, an operation mode of the at least one antenna to a transmission mode based on a second tune code different from the first tune code among the plurality of tune codes.

According to an embodiment, in a storage medium storing at least one computer-readable instruction, the at least one instruction may, when executed by at least one processor of an electronic device, cause the electronic device to perform at least one operation. The at least one operation may include setting an operation mode of at least one antenna among a plurality of antennas of the electronic device to a reception mode based on a first tune code among a plurality of tune codes stored in memory of the electronic device. The at least one operation may include receiving, through the plurality of antennas, an RF signal associated with non-terrestrial network communication in the reception mode. The at least one operation may include identifying a first parameter associated with the received RF signal. The at least one operation may include identifying whether a value of the first parameter exceeds a first value. The at least one operation may include changing, based on identifying that the value of the first parameter exceeds the first value, an operation mode of the at least one antenna to a transmission mode based on a second tune code different from the first tune code among the plurality of tune codes.

### [Brief Description of Drawings]

FIG. 1 is a block diagram illustrating an electronic device in a network environment according to an embodiment.
FIG. 2A is a block diagram illustrating an electronic device for supporting legacy network communication and 5G network communication according to an embodiment.
FIG. 2B is a block diagram illustrating an electronic device for supporting legacy network communication and 5G network communication according to an embodiment.
FIG. 3 is a view illustrating access to an electronic device according to an embodiment.
FIG. 4 is a block diagram illustrating an electronic device according to an embodiment of the disclosure.
FIGS. 5A and 5B are views illustrating an antenna tuning circuit according to an embodiment of the disclosure.
FIG. 6 is a flowchart illustrating an operation method of an electronic device according to an embodiment.
FIG. 7 is a view illustrating a TDD frame transmitted and received by an electronic device according to an embodiment.
FIG. 8 is a view illustrating antennas disposed within a housing of an electronic device according to an embodiment.
FIG. 9 is a view illustrating an operation of an electronic device in a transmission mode according to an embodiment.
FIG. 10 is a view illustrating an operation of an electronic device in a reception mode according to an embodiment.
FIG. 11A is a view illustrating a state in which a second display area of a display is accommodated within a housing according to an embodiment of the disclosure.
FIG. 11B is a view illustrating a state in which a second display area of a display is exposed to the outside of a housing according to an embodiment of the disclosure.

### [Mode for Carrying out the Invention]

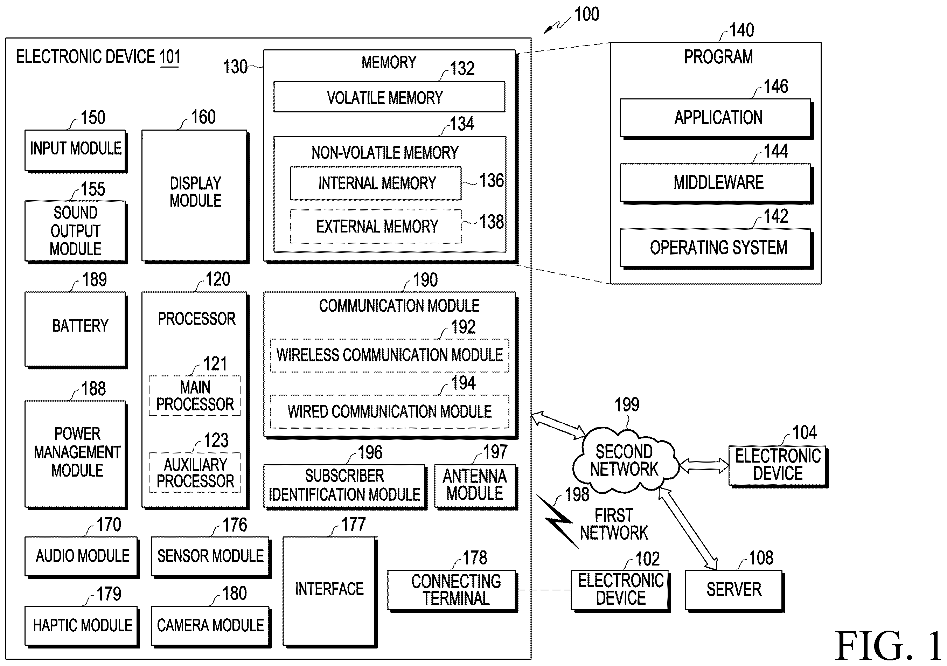

FIG. 1 is a block diagram illustrating an electronic device 101 in a network environment 100 according to an embodiment. Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., the program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for AI model processing. The AI model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The AI model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The AI model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operation state (e.g., power or temperature) of the electronic device 101 or an external environmental state (e.g., the user's state), and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

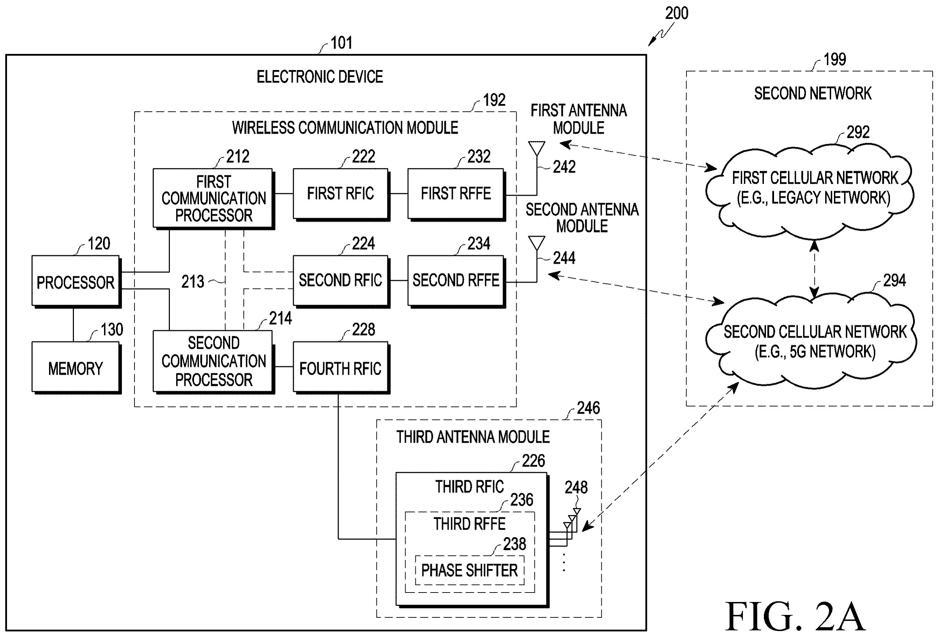

FIG. 2A is a block diagram 200 illustrating an electronic device 101 for supporting legacy network communication and 5G network communication according to an embodiment. Referring to FIG. 2A, the electronic device 101 may include a first communication processor 212, a second communication processor 214, a first radio frequency integrated circuit (RFIC) 222, a second RFIC 224, a third RFIC 226, a fourth RFIC 228, a first radio frequency front end (RFFE) 232, a second RFFE 234, a first antenna module 242, a second antenna module 244, a third antenna module 246, and antennas 248. The electronic device 101 may further include a processor 120 and memory 130. The second network 199 may include a first cellular network 292 and a second cellular network 294. According to an embodiment, the electronic device 101 may further include at least one component among the components of FIG. 1, and the second network 199 may further include at least one other network. According to an embodiment, the first communication processor 212, the second communication processor 214, the first RFIC 222, the second RFIC 224, the fourth RFIC 228, the first RFFE 232, and the second RFFE 234 may form at least part of the wireless communication module 192. According to another embodiment, the fourth RFIC 228 may be omitted or be included as part of the third RFIC 226.

The first communication processor 212 may establish a communication channel of a band that is to be used for wireless communication with the first cellular network 292 or may support legacy network communication via the established communication channel. According to an embodiment, the first cellular network may be a legacy network that includes second generation (2G), third generation (3G), fourth generation (4G), or long-term evolution (LTE) networks. The second communication processor 214 may establish a communication channel corresponding to a designated band (e.g., from about 6GHz to about 60GHz) among bands that are to be used for wireless communication with the second cellular network 294 or may support fifth generation (5G) network communication via the established communication channel. According to an embodiment, the second cellular network 294 may be a 5G network defined by the 3rd generation partnership project (3GPP). Additionally, according to an embodiment, the first communication processor 212 or the second communication processor 214 may establish a communication channel corresponding to another designated band (e.g., about 6GHz or less) among the bands that are to be used for wireless communication with the second cellular network 294 or may support fifth generation (5G) network communication via the established communication channel.

The first communication processor 212 may perform data transmission or reception with the second communication processor 214. For example, data classified as transmitted via the second cellular network 294 may be changed to be transmitted via the first cellular network 292. In this case, the first communication processor 212 may receive transmission data from the second communication processor 214. For example, the first communication processor 212 may transmit/receive data to/from the second communication processor 214 via an inter-processor interface 213. The inter-processor interface 213 may be implemented as, e.g., universal asynchronous receiver/transmitter (UART) (e.g., high speed-UART (HS-UART)) or peripheral component interconnect bus express (PCIe) interface, but is not limited to a specific kind. The first communication processor 212 and the second communication processor 214 may exchange packet data information and control information using, e.g., a shared memory. The first communication processor 212 may transmit/receive various types of information, such as sensing information, information about output strength, and resource block (RB) allocation information, to/from the second communication processor 214.

According to implementation, the first communication processor 212 may not be directly connected with the second communication processor 214. In this case, the first communication processor 212 may transmit/receive data to/from the second communication processor 214 via a processor 120 (e.g., an application processor). For example, the first communication processor 212 and the second communication processor 214 may transmit/receive data to/from the processor 120 (e.g., an application processor) via an HS-UART interface or PCIe interface, but the kind of the interface is not limited thereto. The first communication processor 212 and the second communication processor 214 may exchange control information and packet data information with the processor 120 (e.g., an application processor) using a shared memory.

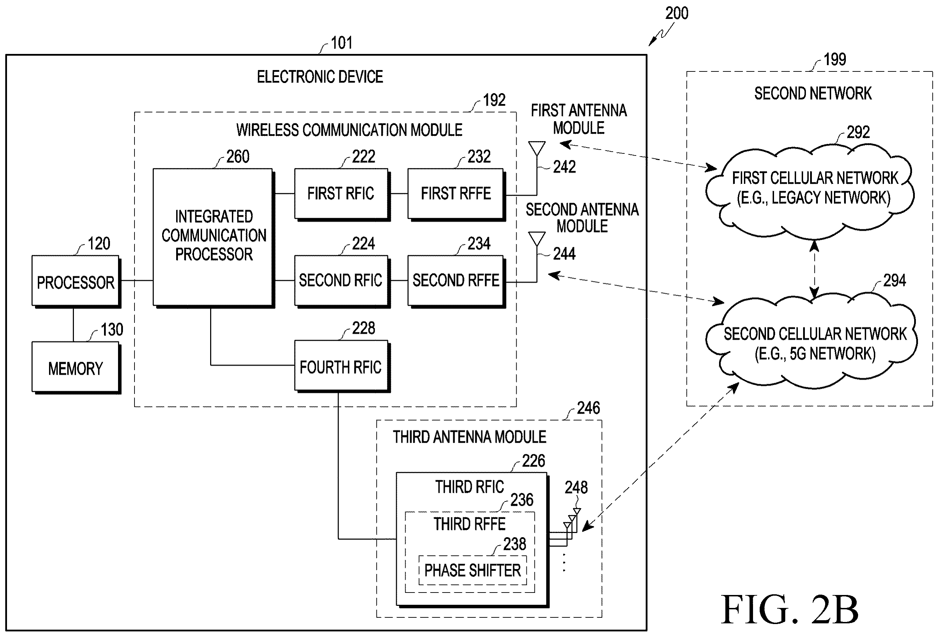

According to an embodiment, the first communication processor 212 and the second communication processor 214 may be implemented in a single chip or a single package. According to an embodiment, the first CP 212 or the second CP 214, along with the processor 120, an auxiliary processor 123, or communication module 190, may be formed in a single chip or single package. For example, as shown in FIG. 2B, an integrated communication processor 260 may support all of the functions for communication with the first cellular network 292 and the second cellular network 294.

As described above, at least one of the processor 120, the first communication processor 212, the second communication processor 214, or the integrated communication processor 260 may be implemented as a single chip or a single package. In this case, the single chip or single package may include a memory (or storage means) storing instructions that cause at least some of operations performed according to an embodiment and a processing circuit (or operation circuit, but the term is not limited) for executing instructions.

Upon transmission, the first RFIC 222 may convert a baseband signal generated by the first communication processor 212 into a radio frequency (RF) signal with a frequency ranging from about 700MHz to about 3GHz which is used by the first cellular network 292 (e.g., a legacy network). Upon receipt, the RF signal may be obtained from the first network 292 (e.g., a legacy network) through an antenna (e.g., the first antenna module 242) and be pre-processed via an RFFE (e.g., the first RFFE 232). The first RFIC 222 may convert the pre-processed RF signal into a baseband signal that may be processed by the first communication processor 212.

Upon transmission, the second RFIC 224 may convert the baseband signal generated by the first communication processor 212 or the second communication processor 214 into a Sub6-band (e.g., about 6GHz or less) RF signal (hereinafter, "5G Sub6 RF signal") that is used by the second cellular network 294 (e.g., a 5G network). Upon receipt, the 5G Sub6 RF signal may be obtained from the second cellular network 294 (e.g., a 5G network) through an antenna (e.g., the second antenna module 244) and be pre-processed via an RFFE (e.g., the second RFFE 234). The second RFIC 224 may convert the pre-processed 5G Sub6 RF signal into a baseband signal that may be processed by a corresponding processor of the first communication processor 212 and the second communication processor 214.

The third RFIC 226 may convert the baseband signal generated by the second communication processor 214 into a 5G Above6 band (e.g., from about 6GHz to about 60GHz) RF signal (hereinafter, "5G Above6 RF signal") that is to be used by the second cellular network 294 (e.g., a 5G network). Upon receipt, the 5G Above6 RF signal may be obtained from the second cellular network 294 (e.g., a 5G network) through an antenna (e.g., the antenna 248) and be pre-processed via the third RFFE 236. The third RFIC 226 may convert the pre-processed 5G Above6 RF signal into a baseband signal that may be processed by the second communication processor 214. According to an embodiment, the third RFFE 236 may be formed as part of the third RFIC 226.

According to an embodiment, the electronic device 101 may include the fourth RFIC 228 separately from, or as at least part of, the third RFIC 226. In this case, the fourth RFIC 228 may convert the baseband signal generated by the second communication processor 214 into an intermediate frequency band (e.g., from about 9GHz to about 11GHz) RF signal (hereinafter, "IF signal") and transfer the IF signal to the third RFIC 226. The third RFIC 226 may convert the IF signal into a 5G Above6 RF signal. Upon receipt, the 5G Above6 RF signal may be received from the second cellular network 294 (e.g., a 5G network) through an antenna (e.g., the antenna 248) and be converted into an IF signal by the third RFIC 226. The fourth RFIC 228 may convert the IF signal into a baseband signal that may be processed by the second communication processor 214.

According to an embodiment, the first RFIC 222 and the second RFIC 224 may be implemented as at least part of a single chip or single package. According to an embodiment, when the first RFIC 222 and the second RFIC 224 in FIG. 2A or 2B are implemented as a single chip or a single package, they may be implemented as an integrated RFIC. In this case, the integrated RFIC is connected to the first RFFE 232 and the second RFFE 234 to convert a baseband signal into a signal of a band supported by the first RFFE 232 and/or the second RFFE 234, and may transmit the converted signal to one of the first RFFE 232 and the second RFFE 234. According to an embodiment, the first RFFE 232 and the second RFFE 234 may be implemented as at least part of a single chip or single package. According to an embodiment, at least one of the first antenna module 242 or the second antenna module 244 may be omitted or be combined with another antenna module to process multi-band RF signals.

According to an embodiment, the third RFIC 226 and the antenna 248 may be disposed on the same substrate to form the third antenna module 246. For example, the wireless communication module 192 or the processor 120 may be disposed on a first substrate (e.g., a main printed circuit board (PCB)). In this case, the third RFIC 226 and the antenna 248, respectively, may be disposed on one area (e.g., the bottom) and another (e.g., the top) of a second substrate (e.g., a sub PCB) which is provided separately from the first substrate, forming the third antenna module 246. Placing the third RFIC 226 and the antenna 248 on the same substrate may shorten the length of the transmission line therebetween. This may reduce a loss (e.g., attenuation) of high-frequency band (e.g., from about 6GHz to about 60GHz) signal used for 5G network communication due to the transmission line. Thus, the electronic device 101 may enhance the communication quality with the second network 294 (e.g., a 5G network).

According to an embodiment, the antenna 248 may be formed as an antenna array which includes a plurality of antenna elements available for beamforming. In this case, the third RFIC 226 may include a plurality of phase shifters 238 corresponding to the plurality of antenna elements, as part of the third RFFE 236. Upon transmission, the plurality of phase shifters 238 may change the phase of the 5G Above6 RF signal which is to be transmitted to the outside (e.g., a 5G network base station) of the electronic device 101 via their respective corresponding antenna elements. Upon receipt, the plurality of phase shifters 238 may change the phase of the 5G Above6 RF signal received from the outside to the same or substantially the same phase via their respective corresponding antenna elements. This enables transmission or reception via beamforming between the electronic device 101 and the outside.

The second cellular network 294 (e.g., a 5G network) may be operated independently (e.g., as standalone (SA)) from, or in connection (e.g., as non-standalone (NSA)) with the first cellular network 292 (e.g., a legacy network). For example, the 5G network may have the access network (e.g., 5G radio access network (RAN) or next generation RAN (NG RAN)) but may not have the core network (e.g., next generation core (NGC)). In this case, the electronic device 101, after accessing a 5G network access network, may access an external network (e.g., the Internet) under the control of the core network (e.g., the evolved packet core (EPC)) of the legacy network. Protocol information (e.g., LTE protocol information) for communication with the legacy network or protocol information (e.g., New Radio (NR) protocol information) for communication with the 5G network may be stored in the memory 230 and be accessed by other components (e.g., the processor 120, the first communication processor 212, or the second communication processor 214).

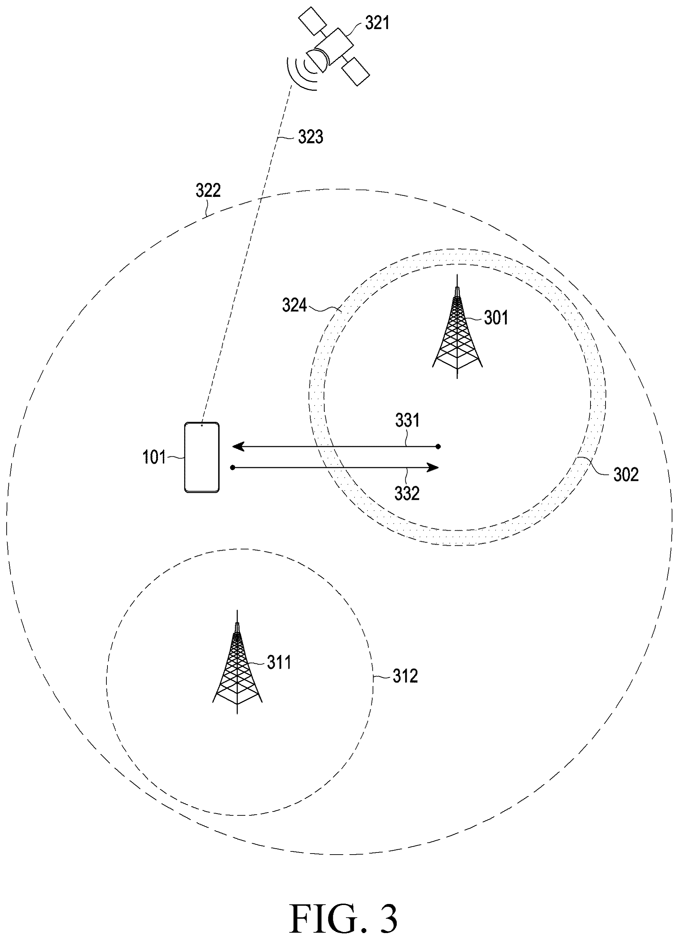

FIG. 3 is a view illustrating access to an electronic device according to an embodiment.

According to an embodiment, the electronic device 101 may be positioned within the coverage 322 of the satellite 321. It will be appreciated by one of ordinary skill in the art that the satellite 321 may be replaced with another type of electronic device supporting non-terrestrial communication in the disclosure. The electronic device 101 may access (323) the satellite 321 within the coverage 322 of the satellite 321. For example, the electronic device 101 may perform a cell scan within the coverage 322 of the satellite 321. The electronic device 101 may identify the satellite 321 (which may be referred to as a cell corresponding to the satellite 321) as a result of performing the cell scan. When the satellite 321 meets a cell selection condition, the electronic device 101 may camp on the satellite 321. The electronic device 101 may camp on the satellite 321 and may perform at least one operation for establishing a connection (e.g., radio resource control (RRC) connection) with the satellite 321. The electronic device 101 may perform at least one operation for attachment (or registration) to a core network (e.g., mobility management entity (MME) or access and mobility management function (AMF)) corresponding to the satellite 321, based on the established connection. The access 323 to the satellite 321 may include, e.g., camping on, establishing a connection, and/or attaching, but is not limited thereto. The coverage 322 of satellite communication may be relatively larger (e.g., 50 times larger) than the coverage 302 and 312 by the terrestrial base stations 301 and 311. The coverage 322 based on satellite communication may cover, e.g., an area not covered by the coverage 302 and 312 by terrestrial communication, and accordingly, the user may perform communication using the electronic device 101 even in an area where terrestrial communication is not supported.

For example, satellite communication based on the satellite 321 may support limited frequency resources and/or limited services. Satellite communication may provide, e.g., a limited service such as an emergency service (e.g., an emergency call) and/or a short message service (SMS), and may not support a service (e.g., video streaming, but not limited thereto) for transmitting and receiving other general data. In an embodiment, satellite communication may support a limited bandwidth (e.g., 1.4 MHz) compared to terrestrial communication. For example, in satellite communication, even when a voice call and/or a data service is supported, the entire cell capacity may be relatively low as 2 to 4 Mbps. On the other hand, the terrestrial communication may support a bandwidth of up to, e.g., 100 MHz when carrier aggregation (CA) is activated, and the cell capacity may also exceed 1 Gbps. In an embodiment, the electronic device 101 may move (331) out of the coverage 302 from a position within the coverage 302 by terrestrial communication, or may move (332) out of the coverage 302 into the coverage 302. In an embodiment, the electronic device 101 may be positioned in the boundary area 324 of the coverage 302 by terrestrial communication. Even after the electronic device 101 accesses the satellite 321 (323), if the terrestrial base stations 301 and 311 are detected based on the position of the electronic device 101, the electronic device 101 may access the terrestrial base stations 301 and 311.

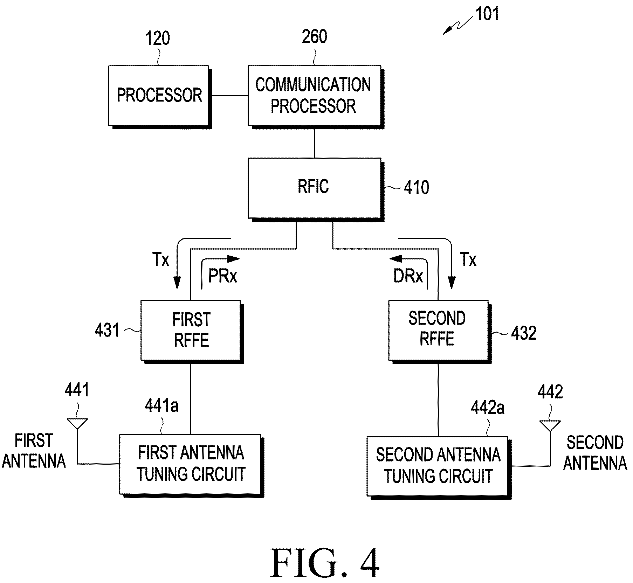

FIG. 4 is a block diagram illustrating an electronic device according to an embodiment of the disclosure.

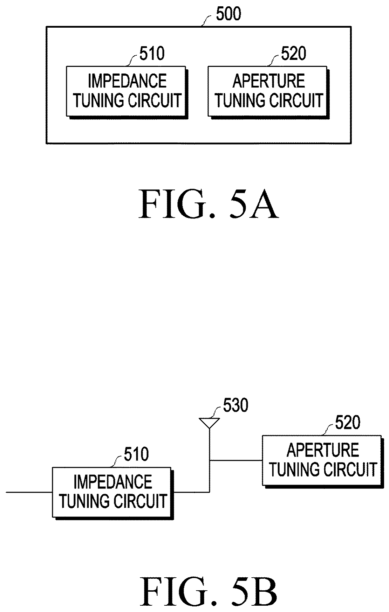

FIGS. 5A and 5B are views illustrating an antenna tuning circuit according to an embodiment of the disclosure;
Hereinafter, a structure and operations of an electronic device 101 according to an embodiment are described with reference to FIGS. 4, 5A, and 5B. Although each drawing of the embodiments described below illustrates that one communication processor 260 and one RFIC 410 are connected to a plurality of RFFEs 431 and 432, embodiments described below are not limited thereto. For example, in embodiments described below, as illustrated in FIG. 2A or FIG. 2B, a plurality of communication processors 212 and 214 and/or a plurality of RFICs 222, 224, 226, and 228 may be connected to a plurality of RFFEs 431 and 432.

FIG. 4 is a block diagram illustrating an electronic device according to an embodiment of the disclosure.

According to an embodiment, FIG. 4 illustrates an embodiment of an electronic device including two antennas 441 and 442. Although FIG. 4 exemplarily illustrates an electronic device including two antennas, according to an embodiment, the electronic device 101 may include three or more antennas. For example, when the electronic device 101 operates as MIMO, the electronic device 101 may receive the signal transmitted from the base station based on the MIMO through the plurality of antennas (e.g., two or more antennas).

Referring to FIG. 4, an electronic device (e.g., the electronic device 101 of FIG. 1) according to an embodiment may include a processor 120, a communication processor 260, an RFIC 410, a first RFFE 431, a second RFFE 432, a first antenna 441, a second antenna 442, a first antenna tuning circuit 441a, or a second antenna tuning circuit 442a. In an embodiment, the first RFFE 431 may be disposed in one area within the housing of the electronic device 101, and the second RFFE 432 may be disposed in another area spaced apart from the one area within the housing of the electronic device 101, but the embodiment is not limited to the arrangement positions.

According to an embodiment, upon transmission, the RFIC 410 may convert a baseband signal generated by the communication processor 260 into a radio frequency (RF) signal used in the communication network. For example, the RFIC 410 may transmit an RF signal used in the first communication network (e.g., a 5G network) or the second communication network (e.g., an LTE network) to the first antenna 441 through the first RFFE 431 and the first antenna tuning circuit 441a. The RFIC 410 may transmit an RF signal used in the first communication network (e.g., a 5G network) or the second communication network (e.g., an LTE network) to the second antenna 442 through the second RFFE 432 and the second antenna tuning circuit 442a.

According to an embodiment, the first antenna tuning circuit 441a may be electrically connected to the first antenna 441, and the second antenna tuning circuit 442a may be electrically connected to the second antenna 442. In an embodiment, the communication processor 260 may adjust the setting value of the first antenna tuning circuit 441a and the setting value of the second antenna tuning circuit 441a to adjust (e.g., tuning) the characteristics of the signal (e.g., transmission signal Tx) transmitted through each connected antenna and the signal (e.g., reception signal Rx) received through each connected antenna. Detailed embodiments thereof are described below with reference to FIGS. 5A and 5B.

According to an embodiment, the first antenna 441 may be set as a first reception antenna (Rx antenna), and the second antenna 442 may be set as a second reception antenna (Rx antenna). The electronic device 101 may receive and decode the signal transmitted from the base station through the first antenna 441 and/or the second antenna 442. For example, the signal received through the first antenna 441 is the first Rx signal and may be transmitted to the communication processor 260 through the first antenna tuning circuit 441a, the first RFFE 431, and the RFIC 410. As another example, the signal received through the second antenna 442 is a second Rx signal and may be transmitted to the communication processor 260 through the second antenna tuning circuit 442a, the second RFFE 432, and the RFIC 410.

According to an embodiment, the first RFFE 431 may include at least one duplexer or at least one diplexer to process the transmission signal Tx and the reception signal Rx together. As another example, the second RFFE 432 may include at least one duplexer or at least one diplexer to process the transmission signal Tx and the reception signal Rx together.

According to an embodiment, when the electronic device 101 operates as MIMO, the electronic device 101 may receive a rank for operating as the MIMO from the base station. The electronic device 101 may receive the signal transmitted based on the MIMO from the base station through the first antenna 441 and the second antenna 442. For convenience of description, the signal received through the first antenna 441 may be referred to as a first signal, and the signal received through the second antenna 442 may be referred to as a second signal.

FIGS. 5A and 5B are views for describing antenna tuning circuits according to an embodiment. Referring to FIG. 5A, an antenna tuning circuit 500 (e.g., the first antenna tuning circuit 441a or the second antenna tuning circuit 442a of FIG. 4) according to an embodiment may include at least one impedance tuning circuit 510 and/or at least one aperture tuning circuit 520. The second antenna tuning circuit 442a may be implemented in the same way as the first antenna tuning circuit 441a but may be implemented differently. The impedance tuning circuit 510 according to an embodiment may be configured to perform impedance matching with a network under the control of at least one processor (e.g., the processor 120, the communication processors 212 and 214, and/or the integrated communication processor 260). The aperture tuning circuit 520 according to an embodiment may change the structure of the antenna by turning on/off the switch under the control of at least one processor.

As shown in FIG. 5B, according to an embodiment, the impedance tuning circuit 510 may be connected to an RFFE (e.g., the first RFFE 431 or the second RFFE 432 of FIG. 4), and may be connected to the duplexer of the RFFE. The impedance tuning circuit 510 may be connected to the antenna 530, and the aperture tuning circuit 520 may be connected to the power rail connecting the impedance tuning circuit 510 and the antenna 530.

According to an embodiment, the electronic device 101 (e.g., the communication processor 260) may change the setting value of the antenna tuning circuit 500 according to whether the strength (e.g., reference signal received power (RSRP) or signal to noise ratio (SNR)) of the received signal, or imbalance occurs. In an embodiment, the electronic device 101 may control to change the on/off state of the switch included in the antenna tuning circuit 500 (e.g., the impedance tuning circuit 510 and/or the aperture tuning circuit 520) as described above according to a change in the setting value of the antenna tuning circuit 500. For example, the electronic device 101 may change an operation mode of at least one antenna among a plurality of antennas (e.g., at least one of the antenna module 197, the first antenna module 242, the second antenna module 244, the third antenna module 246, the first antenna 441, the second antenna 442, or the antenna 530) included in the electronic device 101 between a reception mode and a transmission mode based on changing a setting value of the antenna tuning circuit 500. The reception mode may be an operation mode of the at least one antenna based on a tune code that minimizes a difference in antenna gain between a primary reception antenna (PRx antenna) and a diversity reception antenna (DRx antenna) among the plurality of antennas. The electronic device 101 may maximize a diversity gain of the primary reception antenna and the diversity reception antenna in the reception mode. The electronic device 101 may enhance reception performance by receiving an RF signal through the plurality of antennas based on the reception mode. The transmission mode may be an operation mode of the at least one antenna based on a tune code that maximizes an antenna gain of a transmission antenna (Tx antenna) among the plurality of antennas. The electronic device 101 may enhance transmission performance by transmitting an RF signal through the at least one antenna based on the transmission mode.

According to an embodiment, although FIG. 5B illustrates that one impedance tuning circuit 510 and one aperture tuning circuit 520 are connected to one antenna, for one antenna, either the impedance tuning circuit 510 or the aperture tuning circuit 520 may be omitted, or a plurality of impedance tuning circuits 510 or a plurality of aperture tuning circuits 520 may be included.

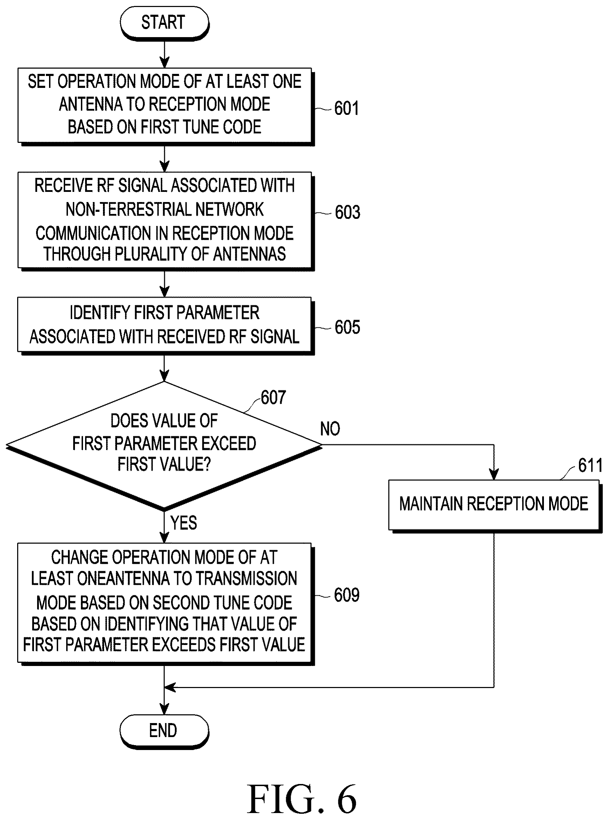

FIG. 6 is a flowchart illustrating an operation method of an electronic device according to an embodiment.

According to an embodiment, the electronic device 101 (e.g., at least one of the processor 120, the first communication processor 212, the second communication processor 214, or the integrated communication processor 260) may set, in operation 601, an operation mode of at least one antenna to a reception mode based on a first tune code. In an embodiment, the electronic device 101 may set an operation mode of at least one antenna to a reception mode based on identifying an event that triggers initiation of satellite communication. For example, the electronic device 101 may identify the event by identifying a user input for driving an application associated with satellite communication. In an embodiment, the application associated with satellite communication may include an application supporting transmission of text information for notifying an emergency circumstance, and the application associated with satellite communication is not limited to the above-described example. The electronic device 101 may set an operation mode of at least one antenna among a plurality of antennas (e.g., at least one of the antenna module 197, the first antenna module 242, the second antenna module 244, the third antenna module 246, the first antenna 441, the second antenna 442, or the antenna 530) included in the electronic device 101 to a reception mode based on a first tune code among a plurality of tune codes. In an embodiment, the memory 130 (or memory included in the at least one processor) may store a plurality of tune codes. The electronic device 101 may identify a first tune code set to correspond to the reception mode among the plurality of tune codes stored in the memory. The electronic device 101 may set, e.g., an operation mode of the first antenna 441 to a reception mode by transmitting the identified first tune code to a first antenna tuning circuit 441a corresponding to the first antenna (e.g., the first antenna 441 of FIG. 4) among the plurality of antennas. In an embodiment, the reception mode may be an operation mode of a reception antenna based on a tune code that maximizes a diversity gain of a plurality of reception antennas. For example, the first tune code may be a tune code configured such that a diversity gain of the first antenna 441 and a second antenna (e.g., the second antenna 442 of FIG. 4) corresponds to a maximum value in the reception mode. The first tune code may have a value of, e.g., "0D 00 78 00", but the disclosure is not limited thereto. In an embodiment, those skilled in the art will readily understand that the maximum value of the diversity gain of the plurality of reception antennas may be changed according to characteristics of the electronic device 101. The reception mode may also be an operation mode of reception antennas based on a tune code that causes a difference in antenna gain between the first antenna 441 and the second antenna 442 to be equal to or less than a threshold. The threshold may be a difference in antenna gain between the first antenna 441 and the second antenna 442 that maximizes a total SNR. Those skilled in the art will readily understand that the threshold may be changed according to at least one of an antenna gain measurement environment (or test environment), a development environment of the electronic device 101, a structure of the housing of the electronic device 101, or a structure in which the plurality of antennas are disposed within the electronic device 101. Although operation 601 described an example of the electronic device 101 setting a setting value of the first antenna tuning circuit 441a corresponding to the first antenna 441, those skilled in the art will readily understand that the electronic device 101 may set operation modes of the plurality of antennas to a reception mode by setting a setting value of the first antenna tuning circuit 441a corresponding to the first antenna 441 and/or a setting value of a second antenna tuning circuit (e.g., the second antenna tuning circuit 442a of FIG. 4) corresponding to the second antenna 442.

In an embodiment, the electronic device 101 may receive, in operation 603, an RF signal associated with non-terrestrial network communication in the reception mode through the plurality of antennas. The electronic device 101 may monitor a satellite signal in the reception mode through the plurality of antennas. In an embodiment, the electronic device 101 may receive an RF signal associated with non-terrestrial network communication based on first TDD pattern information. The first TDD pattern information may include downlink interval information and uplink interval information. The first TDD pattern information may be stored in memory (e.g., the memory 130). The electronic device 101 may receive an RF signal associated with non-terrestrial network communication in the reception mode based on the stored first TDD pattern information without receiving downlink interval information and/or uplink interval information from a communication network (or a satellite base station or mobile base station supporting non-terrestrial network communication). In an embodiment, the reception mode may be an operation mode for ensuring relatively high reception performance of the plurality of antennas. In an embodiment, the electronic device 101 may receive variable TDD pattern information from a communication network after establishing a network communication connection to the communication network. When the electronic device 101 receives variable TDD pattern information from a communication network, the electronic device 101 may receive an RF signal associated with non-terrestrial network communication based on identifying downlink interval information included in the received TDD pattern information. For example, the electronic device 101 may set an operation mode of the at least one antenna to a reception mode by transmitting a tune code corresponding to the reception mode to an antenna tuning circuit corresponding to at least one antenna for which an operation mode is to be changed. The electronic device 101 may receive an RF signal associated with non-terrestrial network communication in the reception mode during a downlink interval based on maintaining an operation mode of at least one antenna as a reception mode during the downlink interval based on the identified downlink interval information.

In an embodiment, the electronic device 101 may identify, in operation 605, a first parameter associated with the received RF signal. The electronic device 101 may identify, e.g., a parameter associated with reception strength of the RF signal. The first parameter associated with reception strength may include RSRP, SNR, received signal strength indicator (RSSI), or reference signal received quality (RSRQ), and the first parameter associated with reception strength is not limited to the above-described examples.

In an embodiment, the electronic device 101 may identify, in operation 607, whether a value of the first parameter exceeds a first value. The first value may be a threshold for identifying whether an electric field corresponding to a position of the electronic device 101 is a strong electric field or a weak electric field, and those skilled in the art will readily understand that the first value may be changed according to embodiments of the disclosure. For example, when the first parameter is an SNR of a received signal, the first value may be set to about 6 dB. The electronic device 101 may identify that a channel state is relatively good based on identifying that the value of the first parameter exceeds the first value. The electronic device 101 may identify that a condition for transmission of an RF signal associated with non-terrestrial network communication is satisfied by identifying that the value of the first parameter exceeds the first value. The electronic device 101 may identify that a channel state is relatively poor based on identifying that the value of the first parameter is equal to or less than the first value. The electronic device 101 may identify that a condition for transmission of an RF signal associated with non-terrestrial network communication is not satisfied by identifying that the value of the first parameter is equal to or less than the first value.

In an embodiment, the electronic device 101 may change, in operation 609, an operation mode of at least one antenna among the plurality of antennas to a transmission mode based on a second tune code based on identifying that the value of the first parameter exceeds the first value (operation 607 - Yes). The electronic device 101 may change an operation mode of the at least one antenna to a transmission mode based on a second tune code different from the first tune code among the plurality of tune codes based on identifying that the value of the first parameter exceeds the first value. In an embodiment, the transmission mode may be an operation mode for ensuring relatively high transmission performance of a transmission antenna (or primary antenna) among the plurality of antennas. For example, the electronic device 101 may set an operation mode of the transmission antenna to a transmission mode by transmitting a tune code corresponding to the transmission mode to at least one antenna tuning circuit. The electronic device 101 may set, e.g., an operation mode of at least one antenna among the plurality of antennas to a transmission mode based on a second tune code among the plurality of tune codes stored in the memory. The electronic device 101 may identify a second tune code set to correspond to the transmission mode among the plurality of tune codes stored in the memory in order to change an operation mode of the antenna to a transmission mode. The electronic device 101 may change, e.g., an operation mode of the first antenna 441 to a transmission mode by transmitting the identified second tune code to the first antenna tuning circuit 441a corresponding to the first antenna 441 among the plurality of antennas. In an embodiment, the transmission mode may be an operation mode of an antenna based on a tune code that maximizes an antenna gain of an antenna (e.g., the first antenna 441) that transmits a signal. For example, the second tune code may be a tune code configured such that an antenna gain of the first antenna 441 corresponds to a maximum value (or second value) in the transmission mode. For example, the second tune code may be a tune code corresponding to a peak value among values of antenna gain of the first antenna 441 measured corresponding to each of the plurality of tune codes during a transmission operation. The second tune code may have a value of, e.g., "00 06 78 01", but the disclosure is not limited thereto. In an embodiment, those skilled in the art will readily understand that the maximum value of the antenna gain of the transmission antenna may be changed according to characteristics of the electronic device 101.

In an embodiment, the electronic device 101 may identify tune codes for setting to a transmission mode or reception mode corresponding to a state of the housing of the electronic device 101. For example, when the housing of the electronic device 101 has a foldable structure, the electronic device 101 may identify different tune code sets according to a folding state of the electronic device 101. The electronic device 101 may set an operation mode of the electronic device 101 (or at least one antenna of the electronic device 101) to a reception mode or transmission mode with respect to a first tune code set when a folding state of the electronic device 101 is a closed state (or folded state) in which the housing is folded with respect to a folding line. The first tune code set may include, e.g., the above-described first tune code and second tune code. The electronic device 101 may set an operation mode of the electronic device 101 (or at least one antenna of the electronic device 101) to a reception mode or transmission mode based on a second tune code set when a folding state of the electronic device 101 is not a closed state (e.g., when the folding state is an open state (or unfolded state)). The second tune code set may include, e.g., a third tune code and a fourth tune code. The electronic device 101 may set an operation mode of at least one of the first antenna 441 or the second antenna 442 to a reception mode when receiving a signal based on the third tune code. The third tune code may be different from the first tune code. The electronic device 101 may identify whether a parameter associated with strength of an RF signal received through at least one of the first antenna 441 or the second antenna 442 exceeds a threshold. The electronic device 101 may change an operation mode of at least one of the first antenna 441 or the second antenna 442 to a transmission mode based on identifying that the parameter associated with strength of the received RF signal exceeds the threshold. Those skilled in the art will readily understand that a threshold for changing an operation mode corresponding to an open state may be different from a threshold corresponding to a closed state. The electronic device 101 may set an operation mode of at least one of the first antenna 441 or the second antenna 442 to a transmission mode when transmitting a signal based on the fourth tune code. The fourth tune code may be different from the second tune code. Although the above-described example described that the folding state of the electronic device 101 is a closed state or an open state, the folding state of the electronic device 101 may further include another state. The electronic device 101 may identify a folding angle of the housing of the electronic device 101 based on sensor data obtained by a sensor module (e.g., the sensor module 176 of FIG. 1). For example, the electronic device 101 may identify that the folding state is a semi-folded state based on identifying whether the folding angle of the housing of the electronic device 101 is included in a predetermined range. The electronic device 101 may set an operation mode of the electronic device 101 (or at least one antenna of the electronic device 101) to a reception mode or transmission mode based on a third tune code set different from the first tune code set or the second tune code set based on identifying that the folding state is a semi-folded state. Although operation 609 described an example of the electronic device 101 changing a setting value of the first antenna tuning circuit 441a corresponding to the first antenna 441 to change an operation mode of the transmission antenna, those skilled in the art will readily understand that the electronic device 101 may set an antenna gain of the transmission antenna to be maximized by changing a setting value of the first antenna tuning circuit 441a corresponding to the first antenna 441 and/or a setting value of the second antenna tuning circuit 442a corresponding to the second antenna 442. The electronic device 101 may relatively enhance transmission performance of a signal associated with non-terrestrial network communication by transmitting an RF signal associated with the non-terrestrial network communication through the first antenna 441 based on changing an operation mode of the first antenna 441 configured to transmit/receive an RF signal associated with non-terrestrial network communication to a transmission mode. In an embodiment, the electronic device 101 may relatively reduce a risk of reception performance degradation by not performing a reception operation through the second antenna 442 set as a diversity reception antenna while the first antenna 441 is set to a transmission mode.

In an embodiment, the electronic device 101 may change an operation mode of the first antenna 441 to a reception mode after transmitting the RF signal in the transmission mode, and receive an RF signal associated with the non-terrestrial network communication through the first antenna 441 and the second antenna 442. For example, the electronic device 101 may change an operation mode of the first antenna 441 to a reception mode to perform a monitoring session for identifying whether an ACK and/or message is received from a non-terrestrial network communication network after performing a transmission operation. In an embodiment, the electronic device 101 may maintain a reception mode to identify whether a message is received from a communication network until termination of an application associated with satellite communication is identified after changing an operation mode of the first antenna 441 to a reception mode. The first tune code may be a tune code configured such that a reception diversity gain of the first antenna 441 and the second antenna 442 corresponds to a maximum value (or third value) in the reception mode, as described above in operation 601. For example, the first tune code may be a tune code corresponding to a peak value among values of reception diversity gain of the first antenna 441 and the second antenna 442 measured corresponding to each of the plurality of tune codes during a reception operation.

In an embodiment, the electronic device 101 may maintain, in operation 611, an operation mode of at least one antenna among the plurality of antennas as a reception mode based on identifying that the value of the first parameter is equal to or less than the first value (operation 607 - No). The electronic device 101 may maintain an operation mode of at least one antenna among the plurality of antennas as a reception mode so that the plurality of antennas may successfully receive a signal associated with non-terrestrial network communication based on identifying that a non-terrestrial network communication environment is poor. The electronic device 101 may maintain an operation mode of the at least one antenna as a reception mode until identifying that transmission of a signal associated with non-terrestrial network communication is possible by identifying that the value of the first parameter exceeds the first value.

In an embodiment, the electronic device 101 may switch an operation mode of the at least one antenna between a reception mode and a transmission mode by transmitting/receiving an RF signal based on stored first TDD pattern information. When the electronic device 101 transmits and receives an RF signal based on stored first TDD pattern information, the electronic device 101 may relatively flexibly switch an operation mode of the at least one antenna without being limited by a requirement to receive TDD pattern information from a communication network. The electronic device 101 may relatively enhance transmission/reception performance of a signal associated with non-terrestrial network communication by switching an operation mode of the at least one antenna.

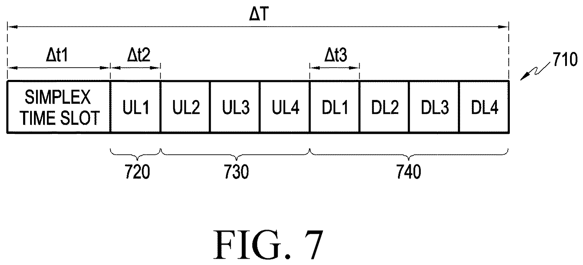

FIG. 7 is a view illustrating a TDD frame transmitted and received by an electronic device according to an embodiment.

In an embodiment, referring to FIG. 7, a TDD frame 710 may include a plurality of slots. The TDD frame 710 may include a SIMPLEX time slot, a plurality of uplink slots, and a plurality of downlink slots. In an embodiment, each of the slots may occupy at least a portion of a period ΔT of the TDD frame 710. For example, the SIMPLEX time slot may occupy a time interval Δt1 of the period ΔT of the TDD frame 710. An uplink slot may occupy a time interval Δt2 of the period ΔT of the TDD frame 710. A downlink slot may occupy a time interval Δt3 of the period ΔT of the TDD frame 710. In an embodiment, the time interval Δt2 and the time interval Δt3 may be set identically, and there is no limitation on specific values of the time intervals. The electronic device 101 may transmit uplink data during a time interval 720 corresponding to a first uplink slot. The first uplink slot may be, e.g., at least one transmission slot included in each frame. For example, when a type of transmission data is a text message, the electronic device 101 may transmit a plurality of frames to a non-terrestrial network communication network (or a satellite supporting non-terrestrial network communication) corresponding to a size of the text message. The electronic device 101 may identify a number of transmission operations required corresponding to a size of transmission data based on identifying the size of the transmission data. For example, when a size of a text message is 140 bytes, the required number of transmission operations may be about 25 times. The electronic device 101 may transmit about 25 frames corresponding to the size of the text message. The remaining uplink slots may be referred to as "unused slots," and the electronic device 101 may not transmit/receive data during a time interval 730 corresponding to the unused slots, but the structure of uplink slots is not limited to the above-described example. The electronic device 101 may receive downlink data during a time interval 740 corresponding to first through fourth downlink slots. The electronic device 101 may store information about the period ΔT of the frame 710, the time intervals Δt1, Δt2, Δt3, and information about use or non-use of at least one uplink slot and downlink slot in memory (e.g., the memory 130).

In an embodiment, the electronic device 101 may be required to receive TDD pattern information from a cellular network (or base station) when transmitting/receiving data associated with cellular communication. The electronic device 101 may not be able to autonomously change transmission/reception timing of data when transmitting/receiving data associated with cellular communication. The electronic device 101 may switch an operation mode of an antenna at timing set by the electronic device 101 by transmitting/receiving data based on TDD pattern information stored in memory of the electronic device 101 when transmitting/receiving data associated with non-terrestrial network communication. Accordingly, the electronic device 101 may perform a transmission operation or reception operation based on a fixed ratio or slot timing between an uplink interval and a downlink interval. The electronic device 101 may identify switching timing between a transmission operation and a reception operation based on TDD timing stored in the memory. The electronic device 101 may determine (or identify) whether to perform a transmission operation or reception operation based on received signal strength without receiving a parameter associated with TDD timing from a network. The electronic device 101 may set an operation mode of the electronic device 101 (or at least one antenna of the electronic device 101) to a transmission mode based on a tune code corresponding to a peak value of antenna gain of a transmission antenna when transmitting. The electronic device 101 may set an operation mode of the electronic device 101 (or at least one antenna of the electronic device 101) to a reception mode based on a tune code corresponding to a peak value of reception diversity gain of a primary reception antenna and a diversity reception antenna when receiving. The electronic device 101 may enhance transmission performance and reception performance of a signal associated with non-terrestrial network communication of the electronic device 101 based on fixed TDD timing.

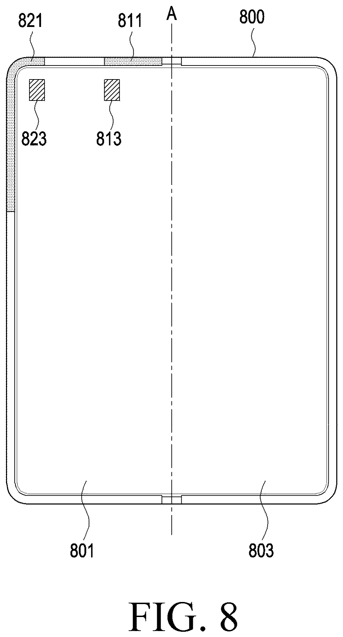

FIG. 8 is a view illustrating antennas disposed within a housing of an electronic device according to an embodiment.

In an embodiment, the housing 800 of the electronic device 101 may be folded with respect to the folding line A. The housing 800 of the electronic device 101 may include a first housing 801 and a second housing 803 with respect to the folding line A. In an embodiment, a primary antenna 811 and a diversity antenna 821 may be disposed on the housing 800 of the electronic device 101 or disposed within the housing 800, and there is no limitation on their placement positions. For example, the primary antenna 811 and/or the diversity antenna 821 may be implemented as a metal antenna on the first housing 801 or implemented as a laser direct structuring (LDS) antenna within the first housing 801. Although FIG. 8 illustrates that the housing 800 of the electronic device 101 has a foldable structure, the housing 800 of the electronic device 101 may be implemented as a bar type or slidable housing, and there is no limitation.

In an embodiment, the electronic device 101 may receive a signal associated with non-terrestrial network communication through the primary antenna 811 and the diversity antenna 821 disposed in the first housing 801. The electronic device 101 may transmit a signal associated with non-terrestrial network communication through the primary antenna 811. In an embodiment, the primary antenna 811 may be referred to as a transmission antenna (Tx antenna) or a primary reception antenna (PRx antenna). The diversity antenna 821 may also be referred to as a diversity reception antenna (DRx antenna). The electronic device 101 may set an operation mode of the primary antenna 811 to a transmission mode or reception mode through a primary antenna tuning circuit 813. For example, the electronic device 101 may set an operation mode of the primary antenna 811 to a transmission mode by transmitting a tune code corresponding to the transmission mode to the primary antenna tuning circuit 813. The electronic device 101 may set an operation mode of the primary antenna 811 to a reception mode by transmitting a tune code corresponding to the reception mode to the primary antenna tuning circuit 813. The electronic device 101 may set an operation mode of the diversity antenna 821 to a transmission mode or reception mode through a diversity antenna tuning circuit 823. For example, the electronic device 101 may set an operation mode of the diversity antenna 821 to a transmission mode by transmitting a tune code corresponding to the transmission mode to the diversity antenna tuning circuit 823. The electronic device 101 may set an operation mode of the diversity antenna 821 to a reception mode by transmitting a tune code corresponding to the reception mode to the diversity antenna tuning circuit 823. The diversity antenna 821 may operate as a diversity reception antenna in a transmission mode or reception mode. The electronic device 101 may operate in a transmission mode or reception mode by changing a tune code corresponding to the primary antenna 811 and a tune code corresponding to the diversity antenna 821.

In an embodiment, the electronic device 101 may also operate in a transmission mode or reception mode by changing a tune code corresponding to the primary antenna 811 or a tune code corresponding to the diversity antenna 821. For example, the electronic device 101 may change antenna settings to a transmission mode or reception mode by maintaining a tune code corresponding to the diversity antenna 821 and changing a tune code corresponding to the primary antenna 811. The electronic device 101 may also change antenna settings to a transmission mode or reception mode by maintaining a tune code corresponding to the primary antenna 811 and changing a tune code corresponding to the diversity antenna 821.

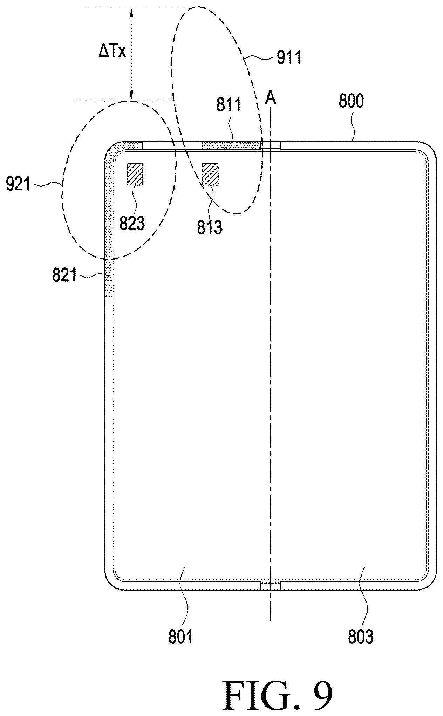

FIG. 9 is a view illustrating an operation of an electronic device in a transmission mode according to an embodiment.

In an embodiment, referring to FIG. 9, the electronic device 101 may set an operation mode of the primary antenna 811 to a transmission mode by transmitting a tune code corresponding to the transmission mode to the primary antenna tuning circuit 813 when transmitting a signal associated with non-terrestrial network communication. The primary antenna 811 may have an increased antenna gain 911 in the transmission mode. An antenna gain 921 of the diversity antenna 821 may relatively decrease while the primary antenna 811 operates in the transmission mode. For example, a reception antenna gain of the diversity antenna 821 may relatively decrease while a transmission signal is radiated through the primary antenna 811 in the transmission mode. In the transmission mode, a difference in antenna gain ΔTx between the primary antenna 811 and the diversity antenna 921 may relatively increase. The electronic device 101 may change an operation mode of the primary antenna 811 to a transmission mode when performing a signal transmission operation. The electronic device 101 may enhance transmission performance of a signal associated with non-terrestrial network communication based on setting an operation mode of the primary antenna 811 to a transmission mode.

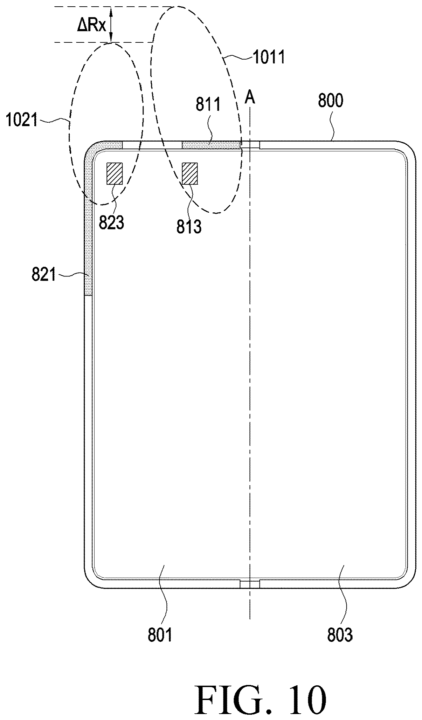

FIG. 10 is a view illustrating an operation of an electronic device in a reception mode according to an embodiment.

In an embodiment, referring to FIG. 10, the electronic device 101 may set an operation mode of the primary antenna 811 to a reception mode by transmitting a tune code corresponding to the reception mode to the primary antenna tuning circuit 813 when receiving a signal associated with non-terrestrial network communication. The primary antenna 811 may have an antenna gain 1011 that is relatively decreased compared to the transmission mode in the reception mode. A difference ΔRx between an antenna gain 1021 of the diversity antenna 821 and the antenna gain 1011 of the primary antenna 811 may be relatively decreased in the reception mode compared to the transmission mode. A diversity antenna gain (e.g., a sum of the antenna gain 1011 of the primary antenna 811 and the antenna gain 1021 of the diversity antenna 821) of the diversity antenna 821 and the primary antenna 811 may be relatively increased in the reception mode compared to the transmission mode. The electronic device 101 may enhance reception performance of a signal associated with non-terrestrial network communication based on setting an operation mode of the primary antenna 811 to a reception mode.

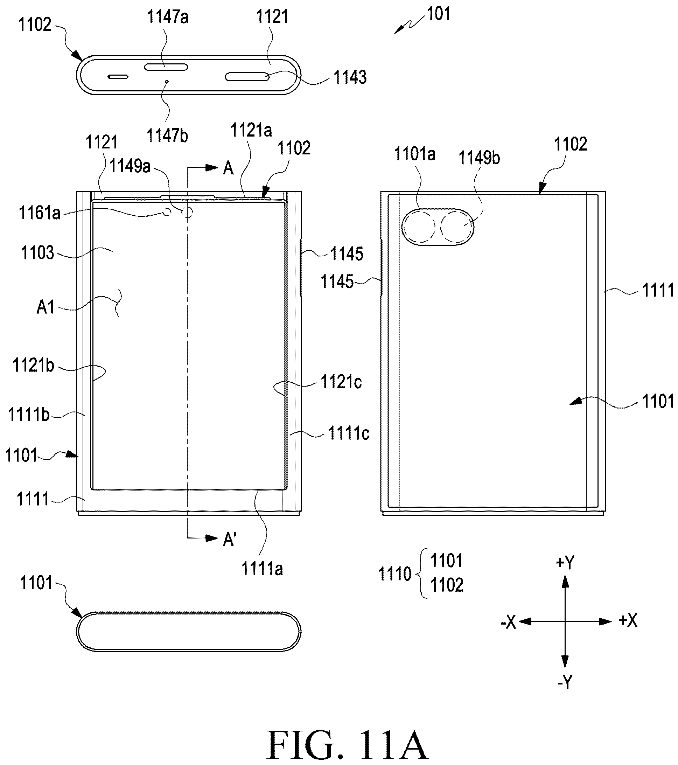

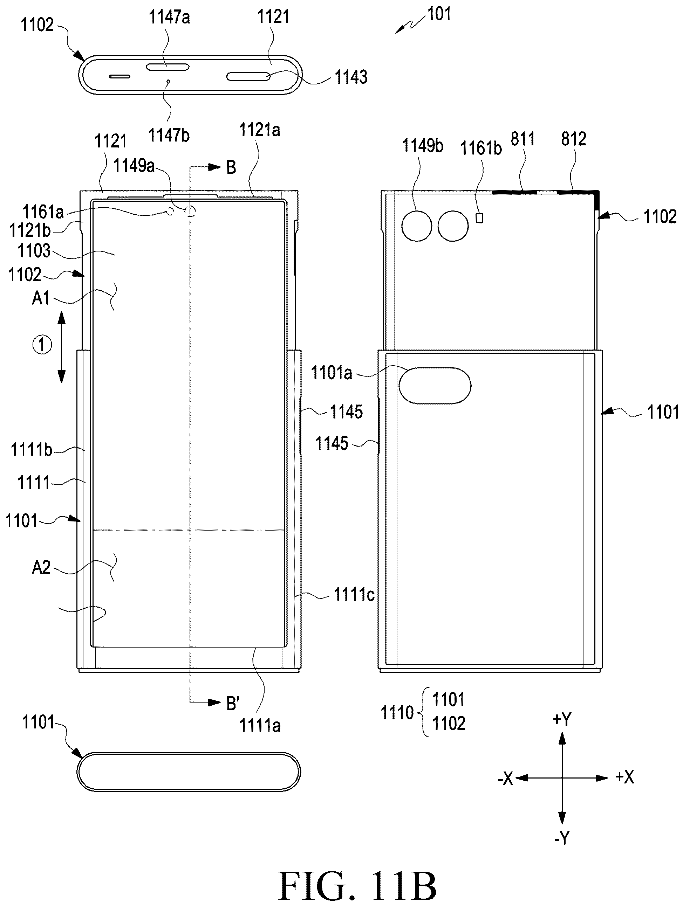

FIG. 11A is a view illustrating a state in which a second display area (e.g., the display area A2 of FIG. 11B) of a display is accommodated in a housing according to an embodiment of the disclosure. FIG. 11B is a view illustrating a state in which a second display area of a display is exposed to the outside of a housing according to an embodiment of the disclosure.

FIGS. 11A and 11B illustrate a structure in which the display 1103 (e.g., flexible display or rollable display) is extended in the length direction (e.g., +Y direction) when the electronic device 101 is viewed from the front. However, the extending direction of the display 1103 is not limited to one direction (e.g., +Y direction). For example, the extending direction of the display 1103 may be changed in design to be extendable in the upper direction (+Y direction), right direction (e.g., +X direction), left direction (e.g., -X direction), and/or lower direction (e.g., -Y direction).

The state illustrated in FIG. 11A may be referred to as a slide-in state of the electronic device 101 or a state in which the second display area A2 of the display 1103 is closed.

The state illustrated in FIG. 11B may be referred to as a slide-out state of the electronic device 101 or a state in which the second display area A2 of the display 1103 is open.

The embodiments of FIGS. 11A and 11B may be combinable with the embodiment of FIG. 1 or the embodiments of FIGS. 2A, 2B, 3, 4, 5A, 5B, 6, and 7.

Referring to FIGS. 11A and 11B, an electronic device 101 (e.g., the electronic device 101 of FIG. 1) may include a housing 1110. The housing 1110 may include a first housing portion 1101 and a second housing portion 1102 disposed to be movable relative to the first housing portion 1101. According to an embodiment, the electronic device 101 may be interpreted as having a structure in which the first housing portion 1101 is disposed to be slidable with respect to the second housing portion 1102. According to an embodiment, the second housing portion 1102 may be disposed to perform reciprocating motion by a predetermined distance in a predetermined direction with respect to the first housing portion 1101, for example, a direction indicated by an arrow ①.

According to an embodiment, the second housing portion 1102 may be referred to as a slide portion or a slide housing, and may be movable relative to the first housing portion 1101. According to an embodiment, the second housing portion 1102 may receive various electrical and electronic components, such as a circuit board or a battery. When the electronic device 101 is in the slide-in state, the second housing portion 1102 may be defined as being at a retracted position, and when the electronic device 101 is in the slide-out state, the second housing portion 1102 may be defined as being at an extended position.

According to an embodiment, the slide-in state of the electronic device 101 (or the slide-out state of the electronic device 101) may be changed into the slide-out state of the electronic device 101 (or the slide-in state of the electronic device 101) based on a predefined user input. For example, the slide-in state of the electronic device 101 (or the slide-out state of the electronic device 101) may be changed into the slide-out state (or the slide-in state of the electronic device 101) in response to a user input to a physical button exposed through a portion of the first housing portion 1101 or a portion of the second housing portion 1102. For example, the slide-in state (or the slide-out state of the electronic device 101) may be changed into the slide-out state (or the slide-in state of the electronic device 101) in response to a touch input to an executable object displayed in the screen display area (e.g., the first display area A1). For example, the slide-in state (or the slide-out state of the electronic device 101) may be changed into the slide-out state (or the slide-in state of the electronic device 101) in response to a touch input having a pressing strength of a reference strength or more at a contact point on the screen display area (e.g., the first display area A1). For example, the slide-in state (or the slide-out state of the electronic device 101) may be changed into the slide-out state (or the slide-in state of the electronic device 101) in response to a voice input received through the microphone of the electronic device 101. For example, the slide-in state (or the slide-out state of the electronic device 101) may be changed into the slide-out state (or the slide-in state of the electronic device 101) in response to an external force applied to the first housing portion 1101 and/or the second housing portion 1102 to move the second housing portion 1102 with respect to the first housing portion 1101. For example, the slide-in state (or the slide-out state of the electronic device 101) may be changed into the slide-out state (or the slide-in state of the electronic device 101) in response to a user input identified from an external electronic device (e.g., earbuds or a smart watch) connected with the electronic device 101. However, the slide in-out operations of the electronic device 101 are not limited thereto.

According to an embodiment, the first housing portion 1101 may receive an actuator (e.g., a motor), a speaker, a sim socket, and/or a sub circuit board electrically connected with a main circuit board. The second housing portion 1102 may receive a main circuit board on which electric components, such as an application processor (AP) or a communication processor (CP) are mounted. According to an embodiment, the second housing portion 1102 may receive the actuator, speaker, sim socket, and/or the sub circuit board electrically connected with the main circuit board, and the first housing portion 1101 may receive the main circuit board where electrical components, such as an application processor (AP) or a communication processor (CP), are mounted. According to an embodiment, the sub circuit board and the main circuit board may be disposed in the first housing portion 1101 or the second housing portion 1102.

In an embodiment, a second housing portion 1102 may include the primary antenna 811 and the diversity antenna 821. The primary antenna 811 and the diversity antenna 821 may be implemented as metal antennas, but are not limited to what is illustrated. For example, the primary antenna 811 and the diversity antenna 821 may also be implemented as LDS antennas. Although FIG. 11B illustrates that the primary antenna 811 and the diversity antenna 821 are disposed on at least a partial region of the second housing portion 1102, the primary antenna 811 and the diversity antenna 821 may also be disposed on at least a partial region of a first housing portion 1101. The primary antenna 811 and the diversity antenna 821 may be configured to receive RF signals of at least the same band. The primary antenna 811 may be configured to receive or transmit an RF signal.

In an embodiment, the electronic device 101 may identify tune codes for setting to a transmission mode or reception mode corresponding to a state of the housing of the electronic device 101. For example, when the housing of the electronic device 101 has a slidable structure, the electronic device 101 may identify different tune code sets according to a sliding state of the electronic device 101. The electronic device 101 may set an operation mode of the electronic device 101 (or at least one antenna of the electronic device 101) to a reception mode or transmission mode based on a first tune code set when a sliding state of the electronic device 101 is a slide-in state of FIG. 11A. The first tune code set may include a first tune code and a second tune code. The first tune code may be a tune code corresponding to a peak value of reception diversity gain of the primary antenna 811 and the diversity antenna 821 when receiving. The second tune code may be a tune code corresponding to a peak value of antenna gain of the primary antenna 811 when transmitting. The electronic device 101 may set an operation mode of the electronic device 101 (or at least one antenna of the electronic device 101) to a reception mode or transmission mode based on a second tune code set when a sliding state of the electronic device 101 is not a slide-out state (e.g., a slide-out state of FIG. 11B (e.g., a fully open state)). The second tune code set may include, e.g., a third tune code and a fourth tune code. The electronic device 101 may set an operation mode of at least one of the primary antenna 811 or the diversity antenna 821 to a reception mode when receiving a signal based on the third tune code. The third tune code may be different from the first tune code. The electronic device 101 may identify whether a parameter associated with strength of an RF signal received through at least one of the primary antenna 811 or the diversity antenna 821 exceeds a threshold. The electronic device 101 may change an operation mode of at least one of the primary antenna 811 or the diversity antenna 821 to a transmission mode based on identifying that the parameter associated with strength of the received RF signal exceeds the threshold. Those skilled in the art will readily understand that a threshold for changing an operation mode corresponding to a slide-out state may be different from a threshold corresponding to a slide-in state. The electronic device 101 may set an operation mode of at least one of the primary antenna 811 or the diversity antenna 821 to a transmission mode when transmitting a signal based on the fourth tune code. The fourth tune code may be different from the second tune code. Although the above-described example described that the sliding state of the electronic device 101 is a slide-in state or a slide-out state, the sliding state of the electronic device 101 may further include an intermediate state. The electronic device 101 may set an operation mode of the electronic device 101 (or at least one antenna of the electronic device 101) to a reception mode or transmission mode based on a third tune code set different from the first tune code set or the second tune code set based on identifying that the sliding state is an intermediate state.

According to an embodiment, the first housing portion 1101 may include a first cover member 1111 (e.g., a main case). The first cover member 1111 may include a 1-1th sidewall 1111a, a 1-2th sidewall 1111b extending from the 1-1th sidewall 1111a, and a 1-3th sidewall 1111c extending from the 1-1th sidewall 1111a and substantially parallel to the 1-2th sidewall 1111b. According to an embodiment, the 1-2th sidewall 1111b and the 1-3th sidewall 1111c may be formed substantially perpendicular to the 1-1th sidewall 1111a.

According to an embodiment, the 1-1th sidewall 1111a, 1-2th sidewall 1111b, and 1-3th sidewall 1111c of the first cover member 1111 may be formed to have an opening in a side surface (e.g., a front surface or front face) to receive (or surround) at least a portion of the second housing portion 1102. For example, at least a portion of the second housing portion 1102 may be surrounded by the first housing portion 1101 and be slid in the direction parallel to the first surface, e.g., arrow ① direction, while being guided by the first housing portion 1101. According to an embodiment, the 1-1th sidewall 1111a, the 1-2th sidewall 1111b, and/or the 1-3th sidewall 1111c of the first cover member 1111 may be integrally formed. According to an embodiment, the 1-1th sidewall 1111a, the 1-2th sidewall 1111b, and/or the 1-3th sidewall 1111c of the first cover member 1111 may be formed as separate structures and be combined or assembled.

According to an embodiment, the first cover member 1111 may be formed to surround at least a portion of the display 1103. For example, at least a portion of the display 1103 may be formed to be surrounded by the 1-1th sidewall 1111a, the 1-2th sidewall 1111b, and/or the 1-3th sidewall 1111c of the first cover member 1111.

According to an embodiment, the second housing portion 1102 may include a second cover member 1121 (e.g., a slide plate). The second cover member 1121 may have a plate shape and include a first surface supporting internal components. For example, the second cover member 1121 may support at least a portion of the display 1103 (e.g., the first display area A1). According to an embodiment, the second cover member 1121 may be referred to as a front cover.

According to an embodiment, the second cover member 1121 may include a 2-1th sidewall 1121a, a 2-2th sidewall 1121b extending from the 2-1th sidewall 1121a, and a 2-3th sidewall 1121c extending from the 2-1th sidewall 1121a and substantially parallel to the 2-2th sidewall 1121b. According to an embodiment, the 2-2th sidewall 1121b and the 2-3th sidewall 1121c may be formed substantially perpendicular to the 2-1th sidewall 1121a.

According to various embodiments, as the second housing portion 1102 moves in a first direction (e.g., direction ①) parallel to the 2-2th sidewall 1121b or the 2-3th sidewall 1121c, the slide-in state and slide-out state of the electronic device 101 may be formed. In the slide-in state of the electronic device 101, the second housing portion 1102 may be positioned at a first distance from the 1-1th sidewall 1111a of the first housing portion 1101. In the slide-out state of the electronic device 101, the second housing portion 1102 may move to be positioned at a second distance larger than the first distance from the 1-1th sidewall 1111a of the first housing portion 1101. In an embodiment, in the slide-in state of the electronic device 101, the first housing portion 1101 may be formed to surround a portion of the 2-2th sidewall 1121b and the 2-3th sidewall 1121c.

According to an embodiment, the electronic device 101 may have an intermediate state between the slide-in state (e.g., fully closed state) of FIG. 11A and the slide-out state (e.g., fully open state) of FIG. 11B. The distance between the 1-1th sidewall 1111a and the 2-1th sidewall 1121a in the intermediate state of the electronic device 101 may be shorter than the distance between the 1-1th sidewall 1111a and the 2-1th sidewall 1121a of the electronic device 101 in the fully open state and be longer than the distance between the 1-1th sidewall 1111a and the 2-1th sidewall 1121a of the electronic device 101 in the fully closed state. According to an embodiment, as at least a portion of the display 1103 slides in the intermediate state of the electronic device 101, the area exposed to the outside may vary. For example, in the intermediate state of the electronic device 101, the ratio of the width (length in the X direction) to the height (length in the Y direction) of the display 1103 and/or the distance between the 1-1th sidewall 1111a and the 2-1th sidewall 1121a may be changed based on the slide of the electronic device 101.

According to an embodiment, the electronic device 101 may include a display 1103, a key input device 1145, a connector hole 1143, audio modules 1147a and 1147b, or camera modules 1149a and 1149b. According to an embodiment, the electronic device 101 may further include an indicator (e.g., a light emitting diode (LED) device) or various sensor modules.

According to an embodiment, the display 1103 may be formed so that the size of a portion of the housing 1110, which may be viewed from the front, is changed based on the slide of the second housing portion 1102. According to an embodiment, the display 1103 may include a first display area A1 and a second display area A2 configured to be exposed to the outside of the electronic device 101 based on the slide of the second housing portion 1102.

According to an embodiment, the first display area A1 may be disposed on the second housing portion 1102. For example, the first display area A1 may be disposed on the second cover member 1121 of the second housing portion 1102. According to an embodiment, the second display area A2 may extend from the first display area A1, and the second display area A2 may be accommodated in, or visually exposed to the outside of, the first housing portion 1101 as the second housing portion 1102 slides relative to the first housing portion 1101. According to an embodiment, as the electronic device 101 changes from the slide-in state to slide-out state, the display 1103 may extend in the lower direction (e.g., -Y direction) of the electronic device 101. For example, in the slide-out state of the electronic device 101, the second display area A2 may be visually exposed under the display 1103 (e.g., in the -Y direction). According to an embodiment, as the electronic device 101 changes from the slide-in state to slide-out state, the display 1103 may extend in the upper direction (e.g., +Y direction) of the electronic device 101. For example, in the slide-out state of the electronic device 101, the second display area A2 may be visually exposed above the display 1103 (e.g., in the +Y direction).

According to an embodiment, the second display area A2 may be accommodated in the space positioned inside the first housing portion 1101 or exposed to the outside of the electronic device 101 while being substantially guided by one area of the first housing portion 1101. According to an embodiment, the second display area A2 may move based on a slide of the second housing portion 1102 in the first direction (e.g., the direction indicated by the arrow ①). For example, while the second housing portion 1102 slides, a portion of the second display area A2 may be deformed into a curved shape in a position corresponding to the curved surface 1113a of the first housing portion 1101.

According to an embodiment, as viewed from above the second cover member 1121 (e.g., front cover), if the electronic device 101 changes from the slide-in state to slide-out state (e.g., if the second housing portion 1102 slides to extend from the first housing portion 1101), the second display area A2 may be gradually exposed to the outside of the first housing portion 1101 and, together with the first display area A1, form a substantially flat surface. According to an embodiment, the display 1103 may be coupled with or disposed adjacent to a touch detection circuit, a pressure sensor capable of measuring the strength (pressure) of touches, and/or a digitizer for detecting a magnetic field-type stylus pen. According to an embodiment, irrespective of the slide-in state or slide-out state of the electronic device 101, the exposed portion of the second display area A2 may be positioned on a portion of the first housing portion, and a portion of the second display area A2 may remain in the curved shape in the position corresponding to the curved surface 1113a.

According to an embodiment, the key input device 1145 may be positioned in an area of the housing 1110 (e.g., the first housing portion 1101 and/or second housing portion 1102). Depending on the appearance and the state of use, the electronic device 101 may be designed to omit the illustrated key input device 1145 or to include additional key input device(s). According to an embodiment, the electronic device 101 may include a key input device (not shown), e.g., a home key button or a touchpad disposed around the home key button. According to an embodiment, at least a portion of the key input device 1145 may be disposed on the 1-1th sidewall 1111a, the 1-2th sidewall 1111b, or the 1-3th sidewall 1111c of the first housing portion 1101. According to an embodiment, at least a portion of the key input device 1145 may be disposed on the 2-1th sidewall 1121a, the 2-2th sidewall 1121b, and/or the 2-3th sidewall 1121c of the second housing portion 1102.

According to an embodiment, the connector hole 1143 may be omitted or may accommodate a connector (e.g., a universal serial bus (USB) connector) for transmitting and receiving power and/or data with an external electronic device. According to an embodiment (not shown), the electronic device 101 may include a plurality of connector holes 1143, and some of the plurality of connector holes 1143 may function as connector holes for transmitting/receiving audio signals with an external electronic device. In the illustrated embodiment, the connector hole 1143 is disposed in the second housing portion 1102, but is not limited thereto. For example, the connector hole 1143 or a connector hole not shown may be disposed in the first housing portion 1101.

According to an embodiment, the audio modules 1147a and 1147b may include at least one speaker hole 1147a or at least one microphone hole 1147b. One of the speaker holes 1147a may be provided as a receiver hole for voice calls, and the other may be provided as an external speaker hole. The electronic device 101 may include a microphone for obtaining sound. The microphone may obtain external sound of the electronic device 101 through the microphone hole 1147b. According to an embodiment, the electronic device 101 may include a plurality of microphones to detect the direction of sound. According to an embodiment, the electronic device 101 may include an audio module in which the speaker hole 1147a and the microphone hole 1147b are implemented as one hole or may include a speaker without the speaker hole 1147a (e.g., a piezo speaker). According to an embodiment, the speaker hole 1147a and the microphone hole 1147b may be positioned in the first housing portion 1101 and/or the second housing portion 1102.

According to an embodiment, the camera modules 1149a and 1149b may include a first camera module 1149a (e.g., front camera) and/or a second camera module 1149b (e.g., rear camera). According to an embodiment, the electronic device 101 may include at least one of a wide-angle camera, a telephoto camera, or a close-up camera. According to an embodiment, the electronic device 101 may measure the distance to the subject by including an infrared projector and/or an infrared receiver. The camera modules 1149a and 1149b may include one or more lenses, an image sensor, and/or an image signal processor. The first camera module 1149a may be disposed to face in the same direction as the display 1103. For example, the first camera module 1149a may be disposed in an area around the first display area A1 or overlapping the display 1103. When disposed in the area overlapping the display 1103, the first camera module 1149a may capture the subject through the display 1103. According to an embodiment, the first camera module 1149a may include an under display camera (UDC) that has a screen display area (e.g., the first display area A1) that may not be visually exposed but hidden. According to an embodiment, the second camera module 1149b may capture the subject in a direction opposite to the first display area A1. According to an embodiment, the first camera module 1149a and/or the second camera module 1149b may be disposed on the second housing portion 1102. According to an embodiment, a plurality of second camera modules 1149b may be formed to provide various arrays. For example, the plurality of second camera modules 1149b may be arranged along a width direction (X-axis direction) that is substantially perpendicular to the sliding direction (e.g., Y-axis direction) of the electronic device 101. As another example, the plurality of second camera modules 1149b may be arranged along the sliding direction (e.g., Y-axis direction) of the electronic device 101. As another example, the plurality of second camera modules 1149b may be arranged along N * M rows and columns like a matrix.

According to an embodiment, the second camera module 1149b is not visually exposed to the outside of the electronic device 101 in the slide-in state of the electronic device 101 and, in the slide-out state of the electronic device 101, may capture the outside of the electronic device 101. According to an embodiment, the second camera module 1149b may capture the outside of the electronic device 101 in the slide-in state and/or slide-out state of the electronic device 101. For example, at least a portion of the housing 210 may be substantially transparent. The second camera module 1149b may capture the outside of the electronic device 101 through the first rear plate 1115 and/or the second rear plate 1125. According to an embodiment, the second camera module 1149b may be visually exposed to the outside of the electronic device 101 to capture the outside of the electronic device 101 in the slide-in state and slide-out state of the electronic device 101. For example, the first housing portion 1101 may include an opening 1101a for the second camera module 1149b.

According to an embodiment, an indicator (not shown) of the electronic device 101 may be disposed on the first housing portion 1101 or the second housing portion 1102, and the indicator may include a light emitting diode to provide state information about the electronic device 101 as a visual signal. The sensor module 1161a or 1161b of the electronic device 101 may produce an electrical signal or data value corresponding to the internal operation state or external environment state of the electronic device. The sensor module 1161a or 1161b may include a proximity sensor, a fingerprint sensor, and/or a biometric sensor (e.g., an iris/face recognition sensor or a heartrate monitor (HRM) sensor). According to an embodiment, the sensor module 1161a or 1161b may further include, e.g., at least one of a gesture sensor, a gyro sensor, an atmospheric pressure sensor, a magnetic sensor, an acceleration sensor, a grip sensor, a color sensor, an infrared (IR) sensor, a temperature sensor, a humidity sensor, or an illuminance sensor. According to an embodiment, the sensor module 1161a or 1161b may be disposed in the first housing portion 1101 and/or the second housing portion 1102. The sensor modules 1161a and 1161b may include a first sensor module 1161a (e.g., proximity sensor or illuminance sensor) disposed on the front surface of the electronic device 101 and/or a second sensor module 1161b (e.g., heart rate monitoring (HRM) sensor) disposed on the rear surface of the electronic device 101.

According to an embodiment, an electronic device (e.g., the electronic device 101) may include a plurality of antennas (e.g., at least one of the antenna module 197, the first antenna module 242, the second antenna module 244, the third antenna module 246, the first antenna 441, the second antenna 442, the antenna 530, the primary antenna 811, or the diversity antenna 821) configured to transmit and/or receive an RF signal associated with non-terrestrial network communication, memory (e.g., the memory 130) storing instructions and a plurality of tune codes, and at least one processor (e.g., at least one of the processor 120, the first communication processor 212, the second communication processor 214, or the integrated communication processor 260) operatively coupled to the plurality of antennas 197, 242, 244, 246, 441, 442, 530, 811, 821 and the memory 130. The instructions may, when executed by the at least one processor 120, 212, 214, 260, cause the electronic device 101 to set an operation mode of at least one antenna among the plurality of antennas 197, 242, 244, 246, 441, 442, 530, 811, 821 to a reception mode based on a first tune code among the plurality of tune codes. The instructions may, when executed by the at least one processor 120, 212, 214, 260, cause the electronic device 101 to receive, through the plurality of antennas 197, 242, 244, 246, 441, 442, 530, 811, 821, an RF signal associated with the non-terrestrial network communication in the reception mode. The instructions may, when executed by the at least one processor 120, 212, 214, 260, cause the electronic device 101 to identify a first parameter associated with the received RF signal. The instructions may, when executed by the at least one processor 120, 212, 214, 260, cause the electronic device 101 to identify whether a value of the first parameter exceeds a first value. The instructions may, when executed by the at least one processor 120, 212, 214, 260, cause the electronic device 101 to change, based on identifying that the value of the first parameter exceeds the first value, an operation mode of the at least one antenna to a transmission mode based on a second tune code different from the first tune code among the plurality of tune codes.

In an embodiment, the instructions may, when executed by the at least one processor 120, 212, 214, 260, cause the electronic device 101 to transmit, through a first antenna among the plurality of antennas 197, 242, 244, 246, 441, 442, 530, 811, 821 configured to transmit/receive an RF signal associated with the non-terrestrial network communication, an RF signal associated with the non-terrestrial network communication in the transmission mode.

In an embodiment, the instructions may, when executed by the at least one processor 120, 212, 214, 260, cause the electronic device 101 to change an operation mode of the first antenna to a reception mode after transmitting the RF signal in the transmission mode. The instructions may, when executed by the at least one processor 120, 212, 214, 260, cause the electronic device 101 to receive, through the first antenna and a second antenna among the plurality of antennas 197, 242, 244, 246, 441, 442, 530, 811, 821 configured to receive an RF signal associated with the non-terrestrial network communication, an RF signal associated with the non-terrestrial network communication.

In an embodiment, the electronic device 101 may further include at least one antenna tuning circuit (e.g., at least one of a first antenna tuning circuit 441a, a second antenna tuning circuit 442a, or an antenna tuning circuit 500) configured to change impedance and/or structure of at least one antenna among the plurality of antennas 197, 242, 244, 246, 441, 442, 530, 811, 821. In an embodiment, the memory 130 may further store first time division duplex (TDD) pattern information. In an embodiment, the instructions may, when executed by the at least one processor 120, 212, 214, 260, cause the electronic device 101 to transmit/receive, based on the stored first TDD pattern information, an RF signal associated with non-terrestrial network communication through at least one antenna among the plurality of antennas 197, 242, 244, 246, 441, 442, 530, 811, 821. The instructions may, when executed by the at least one processor 120, 212, 214, 260, cause the electronic device 101 to, as at least part of receiving, through the plurality of antennas 197, 242, 244, 246, 441, 442, 530, 811, 821, an RF signal associated with the non-terrestrial network communication in the reception mode, transmit a first tune code among the stored plurality of tune codes to the at least one antenna tuning circuit 441a, 442a, 500. The instructions may, when executed by the at least one processor 120, 212, 214, 260, cause the electronic device 101 to, as at least part of receiving, through the plurality of antennas 197, 242, 244, 246, 441, 442, 530, 811, 821, an RF signal associated with the non-terrestrial network communication in the reception mode based on the stored first TDD pattern information, receive, through the plurality of antennas 197, 242, 244, 246, 441, 442, 530, 811, 821, an RF signal associated with the non-terrestrial network communication.

In an embodiment, the instructions may, when executed by the at least one processor 120, 212, 214, 260, cause the electronic device 101 to, as at least part of changing, based on identifying that the value of the first parameter exceeds the first value, the operation mode of the at least one antenna to the transmission mode based on a second tune code different from the first tune code among the plurality of tune codes, control the at least one antenna tuning circuit 441a, 442a, 500 to change the operation mode of the at least one antenna by transmitting the second tune code to the at least one antenna tuning circuit 441a, 442a, 500.

In an embodiment, the second tune code may be a tune code configured such that a first antenna gain of the first antenna among the plurality of antennas 197, 242, 244, 246, 441, 442, 530, 811, 821 corresponds to a second value in the transmission mode.

In an embodiment, the instructions may, when executed by the at least one processor 120, 212, 214, 260, cause the electronic device 101 to, as at least part of receiving, through the plurality of antennas 197, 242, 244, 246, 441, 442, 530, 811, 821, an RF signal associated with the non-terrestrial network communication based on the first tune code, receive, through a first antenna configured to transmit/receive an RF signal associated with the non-terrestrial network communication and a second antenna configured to receive an RF signal associated with the non-terrestrial network communication among the plurality of antennas 197, 242, 244, 246, 441, 442, 530, 811, 821, an RF signal associated with the non-terrestrial network communication.

In an embodiment, the first tune code may be a tune code configured such that a diversity gain of the first antenna and the second antenna corresponds to a third value in the reception mode.

In an embodiment, the first TDD pattern information may include downlink interval information and uplink interval information.

In an embodiment, the first parameter may include at least one of received signal strength indicator (RSSI), signal-to-noise ratio (SNR), or reference signal received power (RSRP).

According to an embodiment, a method of operating the electronic device 101 may include setting an operation mode of at least one antenna among a plurality of antennas 197, 242, 244, 246, 441, 442, 530, 811, 821 of the electronic device 101 to a reception mode based on a first tune code among a plurality of tune codes stored in memory 130 of the electronic device 101. The method may include receiving, through the plurality of antennas 197, 242, 244, 246, 441, 442, 530, 811, 821, an RF signal associated with non-terrestrial network communication in the reception mode. The method may include identifying a first parameter associated with the received RF signal. The method may include identifying whether a value of the first parameter exceeds a first value. The method may include changing, based on identifying that the value of the first parameter exceeds the first value, an operation mode of the at least one antenna to a transmission mode based on a second tune code different from the first tune code among the plurality of tune codes.

In an embodiment, the method may further include transmitting, through a first antenna among the plurality of antennas 197, 242, 244, 246, 441, 442, 530, 811, 821 configured to transmit/receive an RF signal associated with the non-terrestrial network communication, an RF signal associated with the non-terrestrial network communication in the transmission mode.

In an embodiment, the method may further include changing, after transmitting the RF signal in the transmission mode, an operation mode of the first antenna to a reception mode. The method may further include receiving, through the first antenna and a second antenna among the plurality of antennas 197, 242, 244, 246, 441, 442, 530, 811, 821 configured to receive an RF signal associated with the non-terrestrial network communication, an RF signal associated with the non-terrestrial network communication.

In an embodiment, the method may further include transmitting/receiving, based on first TDD pattern information stored in the memory 130, an RF signal associated with non-terrestrial network communication through at least one antenna among the plurality of antennas 197, 242, 244, 246, 441, 442, 530, 811, 821. In the method, receiving, through the plurality of antennas 197, 242, 244, 246, 441, 442, 530, 811, 821, an RF signal associated with the non-terrestrial network communication in the reception mode may include transmitting the first tune code among the plurality of tune codes stored in the memory 130 to at least one antenna tuning circuit 441a, 442a, 500 of the electronic device 101. Receiving, through the plurality of antennas 197, 242, 244, 246, 441, 442, 530, 811, 821, an RF signal associated with the non-terrestrial network communication in the reception mode based on the first TDD pattern information may include receiving, through the plurality of antennas 197, 242, 244, 246, 441, 442, 530, 811, 821, an RF signal associated with the non-terrestrial network communication.

In an embodiment, in the method, changing, based on identifying that the value of the first parameter exceeds the first value, the operation mode of the at least one antenna to the transmission mode based on a second tune code different from the first tune code among the plurality of tune codes may include controlling the at least one antenna tuning circuit 441a, 442a, 500 to change the operation mode of the at least one antenna by transmitting the second tune code to the at least one antenna tuning circuit 441a, 442a, 500.

In an embodiment, the second tune code may be a tune code configured such that a first antenna gain of the first antenna among the plurality of antennas 197, 242, 244, 246, 441, 442, 530, 811, 821 corresponds to a second value in the transmission mode.

In an embodiment, receiving, through the plurality of antennas 197, 242, 244, 246, 441, 442, 530, 811, 821, an RF signal associated with the non-terrestrial network communication based on the first tune code may include receiving, through a first antenna configured to transmit/receive an RF signal associated with the non-terrestrial network communication and a second antenna configured to receive an RF signal associated with the non-terrestrial network communication among the plurality of antennas 197, 242, 244, 246, 441, 442, 530, 811, 821, an RF signal associated with the non-terrestrial network communication.

In an embodiment, the first tune code may be a tune code configured such that a diversity gain of the first antenna and the second antenna corresponds to a third value in the reception mode.

In an embodiment, the first TDD pattern information may include downlink interval information and uplink interval information.

In an embodiment, the first parameter may include at least one of RSSI, SNR, or RSRP.

The electronic device according to an embodiment may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

An embodiment of the disclosure may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities. Some of the plurality of entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
a plurality of antennas (197, 242, 244, 246, 441, 442, 530, 811, 821) configured to transmit and/or receive an RF signal associated with non-terrestrial network communication;
memory (130) storing instructions and a plurality of tune codes; and
at least one processor (120, 212, 214, 260) operatively coupled to the plurality of antennas (197, 242, 244, 246, 441, 442, 530, 811, 821) and the memory (130);
wherein the instructions, when executed by the at least one processor (120, 212, 214 260), cause the electronic device (101) to:
set an operation mode of at least one antenna among the plurality of antennas (197, 242, 244, 246, 441, 442, 530, 811, 821) to a reception mode based on a first tune code among the plurality of tune codes,
receive, through the plurality of antennas (197, 242, 244, 246, 441, 442, 530, 811, 821), an RF signal associated with the non-terrestrial network communication in the reception mode,
identify a first parameter associated with the received RF signal,
identify whether a value of the first parameter exceeds a first value, and
based on identifying that the value of the first parameter exceeds the first value, change the operation mode of the at least one antenna to a transmission mode based on a second tune code different from the first tune code among the plurality of tune codes.

2. The electronic device (101) of claim 1,
wherein the instructions, when executed by the at least one processor (120 212 214 260), cause the electronic device (101) to:
transmit, through a first antenna among the plurality of antennas (197, 242, 244, 246, 441, 442, 530, 811, 821), an RF signal associated with the non-terrestrial network communication in the transmission mode, wherein the first antenna is configured to transmit and receive the RF signal associated with the non-terrestrial network communication.

3. The electronic device (101) of claim 1 or 2,
wherein the instructions, when executed by the at least one processor (120, 212, 214, 260), cause the electronic device (101) to:
change an operation mode of the first antenna to a reception mode after transmitting the RF signal in the transmission mode, and
receive, through the first antenna and a second antenna among the plurality of antennas (197, 242, 244, 246, 441, 442, 530, 811, 821), an RF signal associated with the non-terrestrial network communication, wherein the second antenna is configured to receive the RF signal associated with the non-terrestrial network communication.

4. The electronic device (101) of any one of claims 1 to 3, further comprising at least one antenna tuning circuit (441a, 442a, 500) configured to change impedance and/or structure of at least one antenna among the plurality of antennas (197, 242, 244, 246, 441, 442, 530, 811, 821);
wherein the memory (130) further stores first TDD pattern information, and
wherein the instructions, when executed by the at least one processor (120, 212, 214, 260), cause the electronic device (101) to transmit and receive, based on the stored first TDD pattern information, an RF signal associated with non-terrestrial network communication through at least one antenna among the plurality of antennas,
wherein the instructions, when executed by the at least one processor (120, 212, 214, 260), cause the electronic device (101) to, as at least part of receiving, through the plurality of antennas, the RF signal associated with the non-terrestrial network communication in the reception mode:
transmit a first tune code among the plurality of stored tune codes to the at least one antenna tuning circuit, and
receive, through the plurality of antennas (197, 242, 244, 246, 441, 442, 530, 811, 821), the RF signal associated with the non-terrestrial network communication.

5. The electronic device (101) of any one of claims 1 to 4,
wherein the instructions, when executed by the at least one processor (120, 212, 214, 260), cause the electronic device (101) to, as at least part of changing, based on identifying that the value of the first parameter exceeds the first value, the operation mode of the at least one antenna to the transmission mode, based on the second tune code different from the first tune code among the plurality of tune codes:
control the at least one antenna tuning circuit (441a, 442a, 500) to change the operation mode of the at least one antenna by transmitting the second tune code to the at least one antenna tuning circuit (441a, 442a, 500).

6. The electronic device (101) of any one of claims 1 to 5,
wherein the second tune code is a tune code configured such that a first antenna gain of the first antenna among the plurality of antennas (197, 242, 244, 246, 441, 442, 530, 811, 821) corresponds to a second value in the transmission mode.

7. The electronic device (101) of any one of claims 1 to 6,
wherein the instructions, when executed by the at least one processor (120, 212, 214, 260), cause the electronic device (101) to, as at least part of receiving, through the plurality of antennas (197, 242, 244, 246, 441, 442, 530, 811, 821), the RF signal associated with the non-terrestrial network communication based on the first tune code:
receive, through a first antenna configured to transmit and receive an RF signal associated with the non-terrestrial network communication and a second antenna configured to receive an RF signal associated with the non-terrestrial network communication among the plurality of antennas (197, 242, 244, 246, 441, 442, 530, 811, 821), the RF signal associated with the non-terrestrial network communication.

8. The electronic device (101) of any one of claims 1 to 7,
wherein the first tune code is a tune code configured such that a diversity gain of the first antenna and the second antenna corresponds to a third value in the reception mode.

9. The electronic device (101) of any one of claims 1 to 8,
wherein the first TDD pattern information includes downlink interval information and uplink interval information.

10. The electronic device (101) of any one of claims 1 to 9,
wherein the first parameter includes at least one of RSSI, SNR, or RSRP.

11. A method of operating an electronic device (101), the method comprising:
setting an operation mode of at least one antenna among a plurality of antennas (197, 242, 244, 246, 441, 442, 530, 811, 821) of the electronic device (101) to a reception mode based on a first tune code among a plurality of tune codes stored in memory (130) of the electronic device (101);
receiving, through a plurality of antennas (197, 242, 244, 246, 441, 442, 530, 811, 821), an RF signal associated with the non-terrestrial network communication in the reception mode,
identifying a first parameter associated with the received RF signal,
identifying whether a value of the first parameter exceeds a first value, and
changing, based on identifying that the value of the first parameter exceeds the first value, an operation mode of at least one antenna to a transmission mode, based on a second tune code different from the first tune code among the plurality of tune codes.

12. The method of claim 11, further comprising:
transmitting, through a first antenna among the plurality of antennas (197, 242, 244, 246, 441, 442, 530, 811, 821), an RF signal associated with the non-terrestrial network communication in the transmission mode, wherein the first antenna is configured to transmit and receive the RF signal associated with the non-terrestrial network communication.

13. The method of claim 11 or 12, further comprising:
changing, after transmitting the RF signal in the transmission mode, the operation mode of the first antenna to a reception mode, and
receiving, through the first antenna and a second antenna among the plurality of antennas (197, 242, 244, 246, 441, 442, 530, 811, 821), an RF signal associated with the non-terrestrial network communication, wherein the second antenna is configured to receive the RF signal associated with the non-terrestrial network communication.

14. The method of any one of claims 11 to 13, further comprising:
transmitting and receiving, based on first TDD pattern information stored in the memory (130), an RF signal associated with non-terrestrial network communication through the at least one antenna among the plurality of antennas (197, 242, 244, 246, 441, 442, 530, 811, 821),
wherein receiving, through the plurality of antennas (197, 242, 244, 246, 441, 442, 530, 811, 821), the RF signal associated with the non-terrestrial network communication in the reception mode includes:
transmitting the first tune code from among the plurality of stored tune codes stored in the memory (130) to at least one antenna tuning circuit (441a, 442a, 500) of the electronic device (101), and
receiving, through the plurality of antennas (197, 242, 244, 246, 441, 442, 530, 811, 821), an RF signal associated with the non-terrestrial network communication.

15. A storage medium storing computer-readable instructions, wherein the instructions, when executed by at least one processor (120, 212, 214, 260) of an electronic device (101), cause the electronic device (101) to perform operations,
the operations comprising:
setting an operation mode of at least one antenna among a plurality of antennas (197, 242, 244, 246, 441, 442, 530, 811, 821) of the electronic device (101) to a reception mode based on a first tune code among a plurality of tune codes stored in a memory (130) of the electronic device (101);
receiving, through a plurality of antennas (197, 242, 244, 246, 441, 442, 530, 811, 821), an RF signal associated with the non-terrestrial network communication in the reception mode,
identifying a first parameter associated with the received RF signal,
identifying whether a value of the first parameter exceeds a first value, and
changing, based on identifying the value of the first parameter exceeding the first value, an operation mode of at least one antenna to a transmission mode, based on a second tune code different from the first tune code among the plurality of tune codes.
